# EUROPEAN PATENT APPLICATION

(11) **EP 4 738 909 A1**
(43) Date of publication of application: **06.05.2026**
(21) Application number: 24853566.8
(22) Date of filing: 31.07.2024
(51) Int. Cl.: H04W 16/28

(54) **TRANSMISSION METHOD AND RELATED APPARATUS**

(30) Priority: 11.08.2023 CN 202311021451
(71) Applicant: Huawei Technologies Co., Ltd., Shenzhen, Guangdong 518129 (CN)
(72) Inventor: LI, Fang, Shenzhen, Guangdong 518129 (CN); FAN, Bo, Shenzhen, Guangdong 518129 (CN); YUAN, Shitong, Shenzhen, Guangdong 518129 (CN)
(74) Representative: Thun, Clemens
(86) International application number: PCT/CN2024/108752
(87) International publication number: WO 2025/036154

(57) **Abstract**

This application discloses a transmission method and a related apparatus. The transmission method includes: A terminal device receives first indication information, where the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam; the terminal device determines a first beam based on the first indication information; and the terminal device measures or transmits a reference signal based on the first beam, or transmits a channel based on the first beam. This can reduce a waste of resources and reduce overheads.

## Description

This application claims priority to Chinese Patent Application No. 202311021451.9, filed with the China National Intellectual Property Administration on August 11, 2023 and entitled "TRANSMISSION METHOD AND RELATED APPARATUS", which is incorporated herein by reference in its entirety.

### TECHNICAL FIELD

This application relates to the field of communication technologies, and in particular, to a transmission method and a related apparatus.

### BACKGROUND

In a communication system, a plurality of transmission nodes can simultaneously communicate with one terminal device. The plurality of transmission nodes need to indicate a plurality of beams to the terminal device, and each of the plurality of transmission nodes communicates with the terminal device by using one beam. When the terminal device is indicated to communicate with a single transmission node by using a single beam, if the terminal device performs communication still based on beam information corresponding to the plurality of transmission nodes, resources are wasted.

### SUMMARY

This application provides a transmission method and a related apparatus, to reduce a waste of resources and reduce overheads.

According to a first aspect, this application provides a transmission method. The method can be applied to the field of communication technologies and includes:
First, a terminal device receives first indication information, where the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam; then the terminal device determines a first beam based on the first indication information; and finally the terminal device measures or transmits a reference signal based on the first beam, or transmits a channel based on the first beam.

In this application, after receiving the first indication information sent by a network device, the terminal device may switch from the first communication mode to the second communication mode according to the indication of the first indication information, and transmit the reference signal or the channel based on the first beam associated with the single transmission node. This reduces a waste of resources and reduces overheads. In addition, after switching is performed from the first communication mode to the second communication mode, the reference signal or the channel is transmitted directly based on beam information associated with the single transmission node. This omits a beam information reconfiguration procedure and further reduces a transmission delay, compared with a case in which a reference signal or a channel can be transmitted only after associated beam information is reconfigured for a transmission node.

In a possible implementation, the reference signal includes a channel state information-reference signal (channel state information-reference signal, CSI-RS), the plurality of beams are respectively associated with a plurality of CSI-RS sets, and each CSI-RS set includes a plurality of CSI-RSs.

Before receiving the first indication information, the terminal device receives first configuration information, where the first configuration information indicates the terminal device to report a second measurement result of K groups of CSI-RSs, K is greater than or equal to 0, a second measurement result of each group of CSI-RSs includes at least two CSI-RSs, and the at least two CSI-RSs are from different CSI-RS sets;
after receiving the first indication information and determining the first beam based on the first indication information, the terminal device determines, from the plurality of CSI-RS sets, a first CSI-RS set associated with the first beam, and the terminal device measures only the first CSI-RS set to obtain a first measurement result; and
after the terminal device switches from the first communication mode to the second communication mode, the terminal device reports only the first measurement result, where the first measurement result includes a second measurement result of M CSI-RSs, the M CSI-RSs for the second measurement result are all from the first CSI-RS set, and M is greater than or equal to 0.

In this implementation, before receiving the first indication information, the terminal device receives the first configuration information. The first configuration information indicates content that is indicated to be reported when the terminal device operates in the first communication mode. When the terminal device operates in the first communication mode, the terminal device may communicate with the network device through the plurality of transmission nodes. Therefore, the first configuration information indicates that the second measurement result to be reported by the terminal device include a measurement result of CSI-RSs from different CSI-RS sets. The first configuration information indicates the terminal device to report the second measurement result of the CSI-RSs from the different CSI-RS sets. After the terminal device switches from the first communication mode to the second communication mode, the terminal device reports only the second measurement result of the CSI-RS in the first CSI-RS set associated with the first beam. This reduces overheads and reduces a waste of resources, compared with performing communication still based on beam information configured in the communication mode for the plurality of transmission nodes.

In a possible implementation, the reference signal includes a channel state information-reference signal CSI-RS, a CSI-RS set includes a plurality of CSI-RS groups and one or more CSI-RS resource pairs, each CSI-RS group includes a plurality of CSI-RSs, CSI-RSs in the plurality of CSI-RS groups are associated with the plurality of beams, and the CSI-RS resource pair includes one CSI-RS from each CSI-RS group.

Before receiving the first indication information, the terminal device receives second configuration information, where the second configuration information indicates the terminal device to report a fourth measurement result of X CSI-RSs, X is greater than or equal to 0, and/or the second configuration information indicates the terminal device to report a fifth measurement result of one CSI-RS resource pair;
after receiving the first indication information and determining the first beam based on the first indication information, the terminal device determines, from the CSI-RS set, a CSI-RS associated with the first beam, and terminal device measures only the CSI-RS associated with the first beam, to obtain a third measurement result; and
after the terminal device switches from the first communication mode to the second communication mode, the terminal device reports only the third measurement result.

In this implementation, for the CSI-RS set that includes the plurality of CSI-RS groups and the one or more CSI-RS resource pairs, the second configuration information indicates the terminal device to report the fourth measurement result of the X CSI-RSs, where X is greater than or equal to 0, and/or the second configuration information indicates the terminal device to report the fifth measurement result of one CSI-RS resource pair. After the terminal device switches from the first communication mode to the second communication mode, the terminal device reports only the second measurement result of the CSI-RS associated with the first beam. This reduces overheads and reduces a waste of resources, compared with performing communication still based on beam information configured in the communication mode for the plurality of transmission nodes.

In a possible implementation, the reference signal includes a sounding reference signal (sounding reference signal, SRS), the plurality of beams are respectively associated with a plurality of SRS sets, and that the terminal device transmits the reference signal based on the first beam includes:
the terminal device determines, from the plurality of SRS sets, an SRS set associated with the first beam; and
the terminal device sends only the SRS set associated with the first beam.

In this implementation, after determining the first beam based on the first indication information, the terminal device sends only the SRS set associated with the first beam, and does not send SRS sets associated with other beams. This reduces a waste of resources.

In a possible implementation, the channel includes a physical downlink shared channel (physical downlink shared channel, PDSCH) scheduled by a format of first downlink control information (downlink control information, DCI), and that the terminal device transmits the channel based on the first beam includes:
the terminal device receives the first DCI, where the first DCI is used for scheduling the PDSCH; and
the terminal device receives, by using the first beam, the PDSCH scheduled by the format of the first DCI.

In this implementation, after determining the first beam based on the first indication information, the terminal device receives the first DCI used for scheduling the PDSCH, and receives, by using only the first beam rather than other beams, the PDSCH scheduled by the format of the first DCI. In this way, the terminal device operates in the second communication mode according to the information indicated by the network device. This ensures normal communication between the terminal device and the network device, and reduces a waste of resources.

In a possible implementation, the method further includes:
the first DCI includes a first field, and the first field indicates that the terminal device is in the second communication mode, or the first field indicates that the terminal device receives the PDSCH by using the first beam; and
the terminal device receives, by using the first beam, the PDSCH scheduled by the format of the first DCI.

In this implementation, after the terminal device receives the first DCI used for scheduling the PDSCH, if the first DCI includes the first field indicating that the terminal device is in the second communication mode, or indicating that the terminal device receives the PDSCH by using the first beam, the terminal device may receive, by using the first beam and based on the content indicated by the first field, the PDSCH scheduled by the format of the first DCI, and communicate with the network device according to the foregoing rule.

In a possible implementation, the channel includes a physical uplink shared channel (physical uplink shared channel, PUSCH) scheduled by a format of second downlink control information DCI, and that the terminal device transmits the channel based on the first beam includes:
the terminal device receives the second DCI, where the second DCI is used for scheduling the PUSCH; and
the terminal device sends, by using the first beam, the PUSCH scheduled by the format of the second DCI.

In this implementation, after determining the first beam based on the first indication information, the terminal device receives the second DCI used for scheduling the PUSCH, and receives, by using only the first beam rather than other beams, the PUSCH scheduled by the format of the second DCI. In this way, the terminal device operates in the second communication mode according to the information indicated by the network device. This ensures normal communication between the terminal device and the network device, and reduces a waste of resources.

In a possible implementation, the method further includes:
the second DCI includes a second field, and the second field indicates that the terminal device is in the second communication mode, or the second field indicates that the terminal device sends the PUSCH by using the first beam; and
the terminal device sends, by using the first beam, the PUSCH scheduled by the format of the second DCI.

In this implementation, after the terminal device receives the second DCI used for scheduling the PUSCH, if the second DCI includes the second field indicating that the terminal device is in the second communication mode, or indicating that the terminal device receives the PUSCH by using the first beam, the terminal device may receive, by using the first beam and based on the content indicated by the second field, the PUSCH scheduled by the format of the second DCI, and communicate with the network device according to the foregoing rule.

In a possible implementation, the first indication information includes a medium access control control element (medium access control control element, MAC CE).

In this implementation, the terminal device may receive MAC CE signaling delivered by the network device. The MAC CE signaling indicates the terminal device to switch from the first communication mode to the second communication mode.

In a possible implementation, the first indication information further includes third downlink control information DCI, the third DCI indicates the terminal device to communicate with the single transmission node by using the first beam, and that the terminal device determines the first beam based on the first indication information includes:
the terminal device switches from the first communication mode to the second communication mode based on the MAC CE; and
the terminal device determines the first beam based on the third DCI.

In this implementation, after receiving the MAC CE instruction delivered by the network device, the terminal device further receives the third DCI delivered by the network device, and determines, based on the information indicated in the third DCI, that the terminal device is to communicate with the single transmission node by using the first beam.

In a possible implementation, the plurality of transmission nodes include a first transmission node and a second transmission node, the first transmission node is associated with a first timing advance (timing advance, TA), the first indication information is used to activate one or more beams associated with the first transmission node, and the one or more beams associated with the first transmission node are all associated with the first TA.

In a possible implementation, the second transmission node is associated with a second TA, and the method further includes:
the terminal device stops a timer corresponding to the second TA;
the terminal device stops a random access channel (random access channel, RACH) procedure corresponding to the second TA;
the terminal device clears sending of an uplink physical channel or an uplink reference signal corresponding to the second TA; and
the terminal device clears a hybrid automatic repeat request (hybrid automatic repeat request, HARQ) buffer corresponding to the second TA.

In this implementation, after the terminal device receives the first indication information and switches from the first communication mode to the second communication mode, the terminal device stops maintaining a TA associated with an inactive beam. A specific operation described in the foregoing content is performed, to reduce resource usage overheads of the TA associated with the inactive beam.

In a possible implementation, an effective condition for the terminal device to switch from the first communication mode to the second communication mode is:
after a first time period in which the terminal device receives the first indication information and feeds back acknowledgment information to a network device.

In this implementation, after receiving the first indication information and switching from the first communication mode to the second communication mode based on the content indicated by the first indication information, the terminal device further needs to feed back the acknowledgment information to the network device, so that the network device confirms that the terminal device has switched to the second communication mode, and communicates with the terminal device by using a communication rule corresponding to the second communication mode, to ensure normal network communication.

In a possible implementation, the first communication mode is a multiple transmission and reception point (multiple transmission and reception point or multiple transmit/receive point, mTRP) mode, and the second communication mode is a single transmission and reception point (single transmission and reception point or single transmit/receive point, sTRP) mode.

According to a second aspect, this application provides a transmission method, including:
sending first indication information to a terminal device, where the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam; and
receiving a measurement result of a reference signal from the terminal device, or transmitting a reference signal or a channel.

In a possible implementation, the reference signal includes a channel state information-reference signal CSI-RS, the plurality of beams are respectively associated with a plurality of CSI-RS sets, each CSI-RS set includes a plurality of CSI-RSs, and before the sending the first indication information to the terminal device, the method further includes:
sending first configuration information to the terminal device, where the first configuration information indicates the terminal device to report a second measurement result of K groups of CSI-RSs, K is greater than or equal to 0, a second measurement result of each group of CSI-RSs includes at least two CSI-RSs, and the at least two CSI-RSs are from different CSI-RS sets; and
after the sending the first indication information to the terminal device, the receiving the measurement result of the reference signal from the terminal device includes:
   receiving a first measurement result from the terminal device, where the first measurement result includes a second measurement result of M CSI-RSs, the M CSI-RSs for the second measurement result are all from a first CSI-RS set, and M is greater than or equal to 0.

In a possible implementation, the reference signal includes a channel state information-reference signal CSI-RS, a CSI-RS set includes a plurality of CSI-RS groups and one or more CSI-RS resource pairs, each CSI-RS group includes a plurality of CSI-RSs, CSI-RSs in the plurality of CSI-RS groups are associated with the plurality of beams, the CSI-RS resource pair includes one CSI-RS from each CSI-RS group, and before the sending the first indication information to the terminal device, the method further includes:
sending second configuration information to the terminal device, where the second configuration information indicates the terminal device to report a fourth measurement result of X CSI-RSs, X is greater than or equal to 0, and/or the second configuration information indicates the terminal device to report a fifth measurement result of one CSI-RS resource pair; and
after the sending the first indication information to the terminal device, the receiving the measurement result of the reference signal from the terminal device includes:
   receiving a third measurement result from the terminal device, where the third measurement result is a result of measuring, by the terminal device, only a CSI-RS associated with a first beam.

In a possible implementation, the reference signal includes a sounding reference signal SRS, the plurality of beams are respectively associated with a plurality of SRS sets, and the transmitting the reference signal includes:
receiving an SRS set associated with the first beam.

In a possible implementation, the channel includes a physical downlink shared channel PDSCH scheduled by a format of first downlink control information DCI, and the transmitting the channel includes:
sending the first DCI to the terminal device, where the first DCI is used for scheduling the PDSCH; and
sending the PDSCH scheduled by the format of the first DCI to the terminal device.

In a possible implementation, the method further includes:
the first DCI includes a first field, and the first field indicates that the terminal device is in the second communication mode, or the first field indicates that the terminal device receives the PDSCH by using the first beam; and
sending the PDSCH scheduled by the format of the first DCI to the terminal device.

In a possible implementation, the channel includes a physical uplink shared channel PUSCH scheduled by a format of second downlink control information DCI, and the transmitting the channel includes:
sending the second DCI to the terminal device, where the second DCI is used for scheduling the PUSCH; and
receiving the PUSCH scheduled by the format of the second DCI.

In a possible implementation, the method further includes:
the second DCI includes a second field, and the second field indicates that the terminal device is in the second communication mode, or the second field indicates that the terminal device sends the PUSCH by using the first beam; and
receiving the PUSCH scheduled by the format of the second DCI.

In a possible implementation, the first indication information includes a medium access control control element MAC CE.

In a possible implementation, the first indication information further includes third downlink control information DCI, and the third DCI indicates the terminal device to communicate with the single transmission node by using the first beam.

In a possible implementation, a plurality of network devices include a first network device, the first network device is associated with a first timing advance TA, the first indication information is used to activate one or more beams associated with the first network device, and the one or more beams associated with the first network device are all associated with the first TA.

In a possible implementation, an effective condition of the first indication information is: after a first time period in which determining information is received.

In a possible implementation, the first communication mode is a multiple transmission and reception point mTRP mode, and the second communication mode is a single transmission and reception point sTRP mode.

According to a third aspect, this application provides a communication device. For beneficial effects, refer to the descriptions in the first aspect. Details are not described herein again. The communication device has functions of implementing behaviors in the method instance in the first aspect. The functions may be implemented by using hardware, or may be implemented by hardware executing corresponding software. The hardware or the software includes one or more modules corresponding to the foregoing functions. In a possible design, the communication device includes:
a receiving module, configured to receive first indication information, where the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam;
a processing module, configured to determine a first beam based on the first indication information; and
a transmission module, configured to measure or transmit a reference signal based on the first beam, or transmit a channel based on the first beam.

In a possible implementation, the reference signal includes a channel state information-reference signal CSI-RS, the plurality of beams are respectively associated with a plurality of CSI-RS sets, and each CSI-RS set includes a plurality of CSI-RSs.

Before receiving the first indication information, the terminal device receives first configuration information, where the first configuration information indicates the terminal device to report a second measurement result of K groups of CSI-RSs, K is greater than or equal to 0, a second measurement result of each group of CSI-RSs includes at least two CSI-RSs, and the at least two CSI-RSs are from different CSI-RS sets;
after the terminal device receives the first indication information and determines the first beam based on the first indication information, the transmission module is further configured to: determine, for the terminal device from the plurality of CSI-RS sets, a first CSI-RS set associated with the first beam, and measure, for the terminal device, only the first CSI-RS set to obtain a first measurement result; and
after the terminal device switches from the first communication mode to the second communication mode, the terminal device reports only the first measurement result, where the first measurement result includes a second measurement result of M CSI-RSs, the M CSI-RSs for the second measurement result are all from the first CSI-RS set, and M is greater than or equal to 0.

In a possible implementation, the reference signal includes a channel state information-reference signal CSI-RS, a CSI-RS set includes a plurality of CSI-RS groups and one or more CSI-RS resource pairs, each CSI-RS group includes a plurality of CSI-RSs, CSI-RSs in the plurality of CSI-RS groups are associated with the plurality of beams, and the CSI-RS resource pair includes one CSI-RS from each CSI-RS group.

Before receiving the first indication information, the terminal device receives second configuration information, where the second configuration information indicates the terminal device to report a fourth measurement result of X CSI-RSs, X is greater than or equal to 0, and/or the second configuration information indicates the terminal device to report a fifth measurement result of one CSI-RS resource pair;
after the terminal device receives the first indication information and determines the first beam based on the first indication information, the transmission module is further configured to: determine, for the terminal device from the CSI-RS set, a CSI-RS associated with the first beam, and measure, for the terminal device, only the CSI-RS associated with the first beam, to obtain a third measurement result; and
after the terminal device switches from the first communication mode to the second communication mode, the terminal device reports only the third measurement result.

In a possible implementation, the reference signal includes a sounding reference signal SRS, the plurality of beams are respectively associated with a plurality of SRS sets, and the transmission module is further configured to:
determine, for the terminal device from the plurality of SRS sets, an SRS set associated with the first beam; and
send, for the terminal device, only the SRS set associated with the first beam.

In a possible implementation, the channel includes a physical downlink shared channel PDSCH scheduled by a format of first downlink control information DCI, and the transmission module is further configured to:
receive, for the terminal device, the first DCI, where the first DCI is used for scheduling the PDSCH; and
the terminal device receives, by using the first beam, the PDSCH scheduled by the format of the first DCI.

In a possible implementation, the method further includes:
the first DCI includes a first field, and the first field indicates that the terminal device is in the second communication mode, or the first field indicates that the terminal device receives the PDSCH by using the first beam; and
the terminal device receives, by using the first beam, the PDSCH scheduled by the format of the first DCI.

In a possible implementation, the channel includes a physical uplink shared channel PUSCH scheduled by a format of second downlink control information DCI, and that the terminal device transmits the channel based on the first beam includes:
the terminal device receives the second DCI, where the second DCI is used for scheduling the PUSCH; and
the terminal device sends, by using the first beam, the PUSCH scheduled by the format of the second DCI.

In a possible implementation, the method further includes:
the second DCI includes a second field, and the second field indicates that the terminal device is in the second communication mode, or the second field indicates that the terminal device sends the PUSCH by using the first beam; and
the terminal device sends, by using the first beam, the PUSCH scheduled by the format of the second DCI.

In a possible implementation, the first indication information includes a medium access control control element MAC CE.

In a possible implementation, the first indication information further includes third downlink control information DCI, the third DCI indicates the terminal device to communicate with the single transmission node by using the first beam, and that the terminal device determines the first beam based on the first indication information includes:
the terminal device switches from the first communication mode to the second communication mode based on the MAC CE; and
the terminal device determines the first beam based on the third DCI.

In a possible implementation, a plurality of network devices include a first network device and a second network device, the first network device is associated with a first timing advance TA, the first indication information is used to activate one or more beams associated with the first network device, and the one or more beams associated with the first network device are all associated with the first TA.

In a possible implementation, the second network device is associated with a second TA, and the method further includes:
the terminal device stops a timer corresponding to the second TA;
the terminal device stops a random access channel RACH procedure corresponding to the second TA;
the terminal device clears sending of an uplink physical channel or an uplink reference signal corresponding to the second TA; and
the terminal device clears a hybrid automatic repeat request HARQ buffer corresponding to the second TA.

In a possible implementation, an effective condition for the terminal device to switch from the first communication mode to the second communication mode is:
after a first time period in which the terminal device receives the first indication information and feeds back acknowledgment information to a network device.

In a possible implementation, the first communication mode is a multiple transmission and reception point mTRP mode, and the second communication mode is a single transmission and reception point sTRP mode.

According to a fourth aspect, this application provides a communication device. For beneficial effects, refer to the descriptions in the first aspect. Details are not described herein again. The communication device has functions of implementing behaviors in the method instance in the first aspect. The functions may be implemented by using hardware, or may be implemented by hardware executing corresponding software. The hardware or the software includes one or more modules corresponding to the foregoing functions. In a possible design, the communication device includes:
a sending module, configured to send first indication information to a terminal device, where the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam; and
a transmission module, configured to receive a measurement result of a reference signal from the terminal device, or transmit a reference signal or a channel.

In a possible implementation, the reference signal includes a channel state information-reference signal CSI-RS, the plurality of beams are respectively associated with a plurality of CSI-RS sets, each CSI-RS set includes a plurality of CSI-RSs, and before the sending the first indication information to the terminal device, the method further includes:
sending first configuration information to the terminal device, where the first configuration information indicates the terminal device to report a second measurement result of K groups of CSI-RSs, K is greater than or equal to 0, a second measurement result of each group of CSI-RSs includes at least two CSI-RSs, and the at least two CSI-RSs are from different CSI-RS sets; and
after the first indication information is sent to the terminal device, the transmission module is further configured to:
   receive a first measurement result from the terminal device, where the first measurement result includes a second measurement result of M CSI-RSs, the M CSI-RSs for the second measurement result are all from a first CSI-RS set, and M is greater than or equal to 0.

In a possible implementation, the reference signal includes a channel state information-reference signal CSI-RS, a CSI-RS set includes a plurality of CSI-RS groups and one or more CSI-RS resource pairs, each CSI-RS group includes a plurality of CSI-RSs, CSI-RSs in the plurality of CSI-RS groups are associated with the plurality of beams, the CSI-RS resource pair includes one CSI-RS from each CSI-RS group, and before the sending the first indication information to the terminal device, the method further includes:
sending second configuration information to the terminal device, where the second configuration information indicates the terminal device to report a fourth measurement result of X CSI-RSs, X is greater than or equal to 0, and/or the second configuration information indicates the terminal device to report a fifth measurement result of one CSI-RS resource pair; and
after the first indication information is sent to the terminal device, the transmission module is further configured to:
   receive a third measurement result from the terminal device, where the third measurement result is a result of measuring, by the terminal device, only a CSI-RS associated with a first beam.

In a possible implementation, the reference signal includes a sounding reference signal SRS, the plurality of beams are respectively associated with a plurality of SRS sets, and the transmission module is further configured to:
receive an SRS set associated with the first beam.

In a possible implementation, the channel includes a physical downlink shared channel PDSCH scheduled by a format of first downlink control information DCI, and the transmission module is further configured to:
send the first DCI to the terminal device, where the first DCI is used for scheduling the PDSCH; and
send the PDSCH scheduled by the format of the first DCI to the terminal device.

In a possible implementation, the method further includes:
the first DCI includes a first field, and the first field indicates that the terminal device is in the second communication mode, or the first field indicates that the terminal device receives the PDSCH by using the first beam; and
sending the PDSCH scheduled by the format of the first DCI to the terminal device.

In a possible implementation, the channel includes a physical uplink shared channel PUSCH scheduled by a format of second downlink control information DCI, and the transmitting the channel includes:
sending the second DCI to the terminal device, where the second DCI is used for scheduling the PUSCH; and
receiving the PUSCH scheduled by the format of the second DCI.

In a possible implementation, the method further includes:
the second DCI includes a second field, and the second field indicates that the terminal device is in the second communication mode, or the second field indicates that the terminal device sends the PUSCH by using the first beam; and
receiving the PUSCH scheduled by the format of the second DCI.

In a possible implementation, the first indication information includes a medium access control control element MAC CE.

In a possible implementation, the first indication information further includes third downlink control information DCI, and the third DCI indicates the terminal device to communicate with the single transmission node by using the first beam.

In a possible implementation, a plurality of network devices include a first network device, the first network device is associated with a first timing advance TA, the first indication information is used to activate one or more beams associated with the first network device, and the one or more beams associated with the first network device are all associated with the first TA.

In a possible implementation, an effective condition of the first indication information is: after a first time period in which determining information is received.

In a possible implementation, the first communication mode is a multiple transmission and reception point mTRP mode, and the second communication mode is a single transmission and reception point sTRP mode.

According to a fifth aspect, this application provides a communication device, including a processor and an interface circuit. The interface circuit is configured to receive a signal from another communication device and transmit the signal to the processor, or send a signal from the processor to another communication device. The processor is configured to implement the method in any one of the first aspect or the possible implementations of the first aspect or implement the method in any one of the second aspect or the possible implementations of the second aspect by using a logic circuit or executable code instructions.

According to a sixth aspect, this application provides a communication system, including a terminal device and a network device, where
the terminal device performs the method in any one of the first aspect or the possible implementations of the first aspect; and
the network device performs the method in any one of the second aspect or the possible implementations of the second aspect.

According to a seventh aspect, this application provides a computer program product. When the computer program product runs on a computer, the computer is enabled to perform the method in any one of the first aspect or the possible implementations of the first aspect or perform the method in any one of the second aspect or the possible implementations of the second aspect.

According to an eighth aspect, this application provides a chip system. The chip system includes a processor, configured to implement the method in any one of the first aspect or the possible implementations of the first aspect or implement the method in any one of the second aspect or the possible implementations of the second aspect. In a possible design, the chip system further includes a memory, configured to store program instructions and/or data. The chip system may include a chip, or may include a chip and another discrete device.

According to a ninth aspect, this application provides a computer-readable storage medium. The storage medium stores a computer program or instructions. When the computer program or instructions are executed by a communication device, the method in any one of the first aspect or the possible implementations of the first aspect is implemented.

The solutions in the second aspect to the ninth aspect are used to implement or cooperate in implementing the method in any one of the first aspect or the possible implementations of the first aspect, and therefore can achieve beneficial effects that are the same as or corresponding to the first aspect. Details are not described herein again.

### BRIEF DESCRIPTION OF DRAWINGS

FIG. 1a is a diagram of an architecture of a communication system to which an embodiment of this application is applied;
FIG. 1b is a diagram of another architecture of a communication system to which an embodiment of this application is applied;
FIG. 1c is a diagram of another architecture of a communication system to which an embodiment of this application is applied;
FIG. 1d is a schematic flowchart of transmission according to an embodiment of this application;
FIG. 2 is another schematic flowchart of a transmission method according to an embodiment of this application;
FIG. 3 is a diagram of composition of a CSI-RS set used for non-coherent joint transmission according to an embodiment of this application;
FIG. 4 is another schematic flowchart of a transmission method according to an embodiment of this application;
FIG. 5 is another schematic flowchart of a transmission method according to an embodiment of this application;
FIG. 6 is another schematic flowchart of a transmission method according to an embodiment of this application;
FIG. 7 is another schematic flowchart of a transmission method according to an embodiment of this application;
FIG. 8 is a diagram of a structure of a communication device according to an embodiment of this application;
FIG. 9 is a diagram of another structure of a communication device according to an embodiment of this application;
FIG. 10 is a diagram of another structure of a communication device according to an embodiment of this application;
FIG. 11 is a diagram of another structure of a communication device according to an embodiment of this application; and
FIG. 12 is a diagram of another structure of a communication device according to an embodiment of this application.

### DESCRIPTION OF EMBODIMENTS

The following clearly and completely describes technical solutions in embodiments of this application with reference to accompanying drawings in embodiments of this application. It is clear that the described embodiments are merely some rather than all of embodiments of this application. All other embodiments obtained by a person skilled in the art based on embodiments of this application without creative efforts shall fall within the protection scope of this application. A person skilled in the art can know that, as technologies develop and new scenarios emerge, the technical solutions provided in embodiments of this application are also applicable to similar technical issues.

In the specification, claims, and accompanying drawings of this application, terms such as "first" and "second" are intended to distinguish between similar objects but do not necessarily indicate a specific order or sequence. It should be understood that the data termed in such a way are interchangeable in appropriate circumstances so that embodiments described herein can be implemented in other orders than the order illustrated or described herein. Moreover, terms "include", "contain", and any other variants thereof are intended to cover non-exclusive inclusions. For example, a process, method, system, product, or device that includes a series of steps or modules is not necessarily limited to those steps or modules expressly listed, but may include other steps or modules not expressly listed or inherent to such a process, method, product, or device.

The term "and/or" in this application may describe only an association relationship for describing associated objects and represents that three relationships may exist. For example, A and/or B may represent the following three cases: Only A exists, both A and B exist, and only B exists. In addition, the character "/" in this application generally indicates an "or" relationship between associated objects.

It should also be noted that in some alternative implementations, the illustrated functions/actions may be performed not in a sequence of accompanying drawings. For example, actually, two accompanying drawings shown in succession may essentially occur simultaneously or may sometimes be performed in reverse order, depending on the related functions/actions.

In embodiments of this application, unless otherwise specified, "at least one" means one or more, and "a plurality of" means two or more. It can be understood that in this application, "when", "if", and "in case of" all mean that an apparatus performs corresponding processing in an objective situation, are not intended to limit time, do not require that the apparatus should have a determining action during implementation, and do not mean that there are other limitations. In addition, the specific term "example" means "used as an example, an embodiment, or an illustration". Any embodiment described as "example" is not necessarily construed as superior or preferable to other embodiments.

The following describes embodiments of this application with reference to the accompanying drawings. A person of ordinary skill in the art can know that, as technologies develop and new scenarios emerge, the technical solutions provided in embodiments of this application are also applicable to similar technical issues.

For better understanding of the solutions in embodiments of this application, the following first describes application scenarios of embodiments of this application.

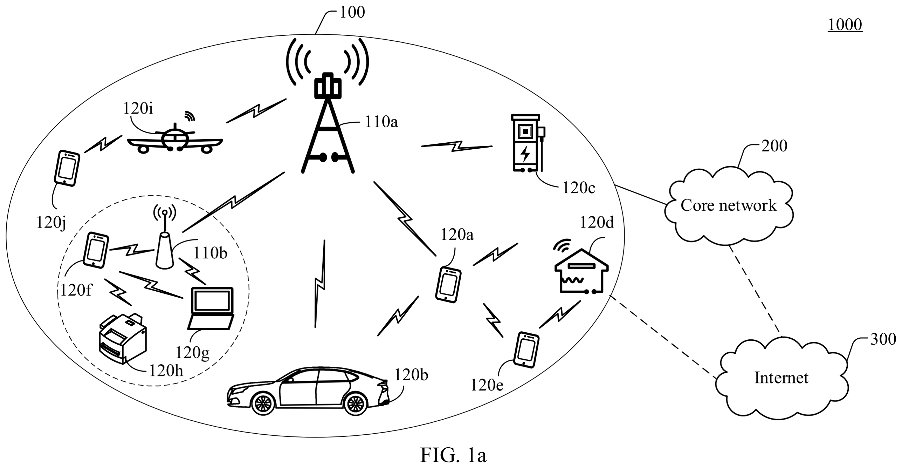

FIG. la is a diagram of an architecture of a communication system to which an embodiment of this application is applied. As shown in FIG. 1a, the communication system 1000 includes a radio access network 100 and a core network 200. Optionally, the communication system 1000 may further include an internet 300. The radio access network 100 may include at least one network device (for example, 110a and 110b in FIG. 1a), and may further include at least one terminal device (for example, 120a to 120j in FIG. 1a). The terminal device is connected to the network device in a wireless manner, and the network device is connected to the core network in a wireless or wired manner. A core network device and the network device may be different independent physical devices, functions of the core network device and logical functions of the network device may be integrated into one physical device, or some functions of the core network device and some functions of the network device may be integrated into one physical device. Terminal devices may be connected to each other and network devices may be connected to each other in a wired or wireless manner. FIG. 1a is merely a diagram. The communication system may further include other network devices, for example, may further include a wireless relay device and a wireless backhaul device, which are not shown in FIG. 1a.

The network device is an access device used by the terminal device to access the communication system in a wireless manner. The network device may be a base station (base station), an evolved NodeB (evolved NodeB, eNodeB), a transmission and reception point (transmission and reception point or transmit/receive point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that performs some functions of a base station, for example, may be a central unit (central unit, CU) or a distributed unit (distributed unit, DU). The CU herein performs functions of a radio resource control protocol and a packet data convergence protocol (packet data convergence protocol, PDCP) of the base station, and may further perform functions of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers, refer to related technical specifications of the 3rd generation partnership project (3rd generation partnership project, 3GPP). The network device may be a macro base station (for example, 110a in FIG. 1a), may be a micro base station or an indoor base station (for example, 110b in FIG. 1a), or may be a relay node, a donor node, or the like. A specific technology and a specific device form that are used by the network device are not limited in embodiments of this application. The following uses a base station as an example for description.

The terminal is a device having wireless receiving and sending functions, and may send a signal to the network device or receive a signal from the network device. The terminal device may also be referred to as user equipment (user equipment, UE), a mobile station, a mobile terminal device, or the like. The terminal device can be widely used in various scenarios, for example, device-to-device (device-to-device, D2D), vehicle-to-everything (vehicle-to-everything, V2X) communication, machine type communication (machine type communication, MTC), internet of things (internet of things, IoT), virtual reality, augmented reality, industrial control, self-driving, telemedicine, smart grid, smart furniture, smart office, smart wearables, smart transportation, and smart city. The terminal device may be a mobile phone, a tablet computer (Pad), a computer having wireless receiving and sending functions, a wearable device, a vehicle, a vehicle-mounted mobile apparatus, an airplane, a ship, a robot, a robotic arm, a personal digital assistant, a wearable device, a virtual reality (virtual reality, VR) device, an augmented reality (augmented reality, AR) device, various internet-of-things devices, or the like. A specific technology and a specific device form that are used by the terminal device are not limited in embodiments of this application.

The network device and the terminal device may be at invariable locations, or may be movable. The network device and the terminal device may be deployed on land, including an indoor device, an outdoor device, a handheld device, or a vehicle-mounted device; may be deployed on water; or may be deployed on an airplane, a balloon, or an artificial satellite. Application scenarios of the network device and the terminal device are not limited in embodiments of this application.

Roles of the network device and the terminal device may be relative. For example, a helicopter or an uncrewed aerial vehicle 120i in FIG. 1a may be configured as a mobile network device. For the terminal device 120j accessing the radio access network 100 through 120i, the terminal device 120i is a network device. However, for the network device 110a, 120i is a terminal device. In other words, communication between 110a and 120i is performed based on a radio air interface protocol. Certainly, communication between 110a and 120i may be alternatively performed based on an interface protocol between network devices. In this case, for 110a, 120i is also a network device. Therefore, both the network device and the terminal device may be collectively referred to as communication devices, 110a and 110b each in FIG. la may be referred to as a communication device having a network device function, and 120a to 120j each in FIG. 1a may be referred to as a communication device having a terminal device function.

Communication between a network device and a terminal device, between network devices, and between terminal devices may be performed by using a licensed spectrum, an unlicensed spectrum, or both a licensed spectrum and an unlicensed spectrum. Communication may be performed by using a spectrum below 6 gigahertz (gigahertz, GHz), a spectrum above 6 GHz, or both a spectrum below 6 GHz and a spectrum above 6 GHz. Spectrum resources used for wireless communication are not limited in embodiments of this application.

In this embodiment of this application, a function of the network device may be alternatively performed by a module (for example, a chip) in the network device, or may be performed by a control subsystem including the function of the network device. The control subsystem including the function of the network device herein may be a control center in the foregoing application scenarios, such as smart grid, industrial control, smart transportation, and smart city. A function of the terminal device may be alternatively performed by a module (for example, a chip or a modem) in the terminal device, or may be performed by an apparatus including the function of the terminal device.

Transmission methods provided in embodiments of this application are applicable to downlink (Downlink, DL) data transmission, uplink (Uplink, UL) data transmission, or device-to-device (Device-to-Device, D2D) data transmission. For the downlink data transmission, a sending device is a network device, and a corresponding receiving device is a terminal device. For the uplink data transmission, a sending device is a terminal device, and a corresponding receiving device is a network device. For the D2D data transmission, a sending device is a terminal device, and a corresponding receiving device is also a terminal device. Application scenarios are not limited in embodiments of this application.

The transmission methods provided in embodiments of this application are applicable to a communication system using a hybrid automatic repeat request HARQ technology, a frequency division duplex (Frequency Division Duplex, FDD) system, and a time division duplex (Time Division Duplex, TDD) system. The transmission methods provided in embodiments of this application are applicable to any communication system that uses a low-density parity-check (low-density parity-check, LDPC) code, a polar code (Polar code), or the like as a data channel coding scheme, or are applicable to a 5G communication system and other wireless communication systems. This is not limited in embodiments of this application.

Communication between a network device and a terminal device and between terminal devices may be performed by using a licensed spectrum (licensed spectrum), an unlicensed spectrum (unlicensed spectrum), or both a licensed spectrum and an unlicensed spectrum. Communication between the access network device and the terminal device and between the terminal devices may be performed by using a spectrum below 6 GHz, a spectrum above 6 GHz, or both a spectrum below 6 GHz and a spectrum above 6 GHz. Spectrum resources used by the network device and the terminal device are not limited in embodiments of this application.

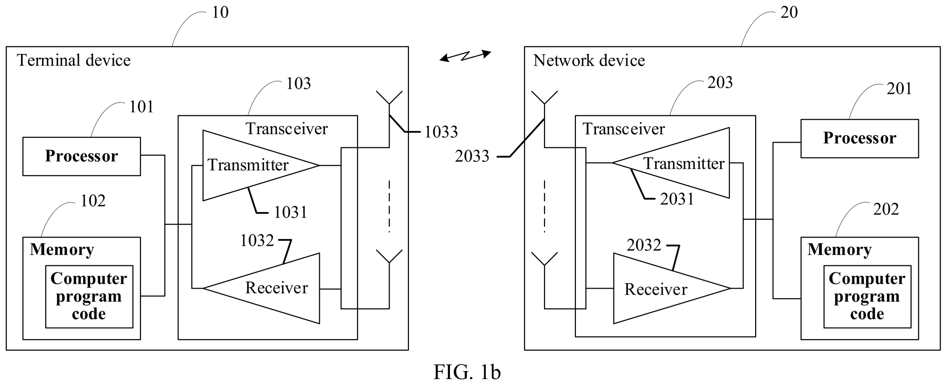

In addition, communication between each network device and each terminal device in the communication system shown in FIG. 1a may be alternatively represented in another form. FIG. 1b is a diagram of another architecture of a communication system to which an embodiment of this application is applied. A terminal device 10 includes a processor 101, a memory 102, and a transceiver 103. The transceiver 103 includes a transmitter 1031, a receiver 1032, and an antenna 1033. A network device 20 includes a processor 201, a memory 202, and a transceiver 203. The transceiver 203 includes a transmitter 2031, a receiver 2032, and an antenna 2033. The receiver 1032 may be configured to receive transmission control information through the antenna 1033, and the transmitter 1031 may be configured to send transmission feedback information to the network device 20 through the antenna 1033. The transmitter 2031 may be configured to send the transmission control information to the terminal device 10 through the antenna 2033, and the receiver 2032 may be configured to receive, through the antenna 2033, the transmission feedback information sent by the terminal device 10.

It should be understood that the communication scenarios shown in FIG. la and FIG. 1b are merely examples, and a quantity of terminal devices and a quantity of network devices in a communication system are not specifically limited in this application. The transmission methods provided in embodiments of this application can be applied to the foregoing described structures, but are not limited thereto. This is not limited herein.

In the communication scenarios shown in FIG. la and FIG. 1b, the network device and the terminal device may communicate with each other based on a beam. One beam may be corresponding to one or more antenna ports, configured to transmit a data channel, a control channel, a sounding reference signal, and the like. For example, a transmission beam may be spatial distribution of signal strength formed in different directions after a signal is transmitted through an antenna, and a reception beam may be spatial distribution of signal strength, in different directions, of a radio signal received from an antenna.

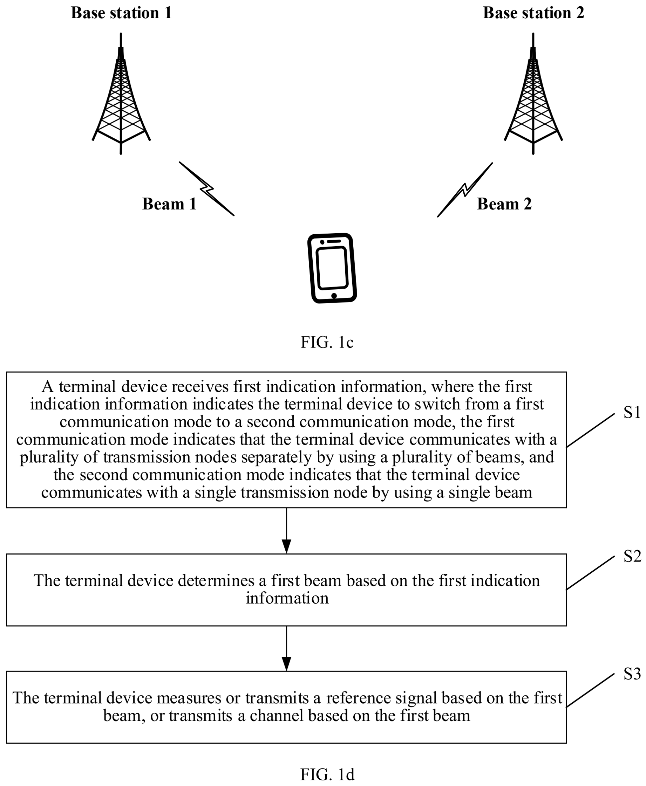

The network device may include one or more transmission nodes. The network device may communicate with one terminal device through a plurality of transmission nodes (a plurality of antennas, a plurality of stations, or a plurality of transceiver units), to transmit data to or provide a service for the terminal device. In a transmission scenario or a communication mode for the plurality of transmission nodes, the network device needs to indicate a plurality of common beams to the terminal device, to perform multi-node transmission. For example, refer to FIG. 1c. FIG. 1c is a diagram of another architecture of a communication system to which an embodiment of this application is applied. As shown in FIG. lc, that network devices are base stations is used as an example. Two base stations simultaneously transmit signals to the terminal device, and each base station uses one common beam. The network devices need to indicate, to the terminal device, common beams corresponding to the two stations. After receiving the two common beams, the terminal device needs to further determine how the two common beams are applied to transmission of each channel or reference signal. For example, for physical downlink control channels (physical downlink control channels, PDCCHs), some PDCCHs are sent by using a base station 1 and need to use a common beam 1, some PDCCHs are sent by using a base station 2 and need to use a common beam 2, and some PDCCHs are sent by using both the base station 1 and the base station 2 and need to use both the common beam 1 and the common beam 2. The terminal device needs to determine which PDCCH uses which common beam.

It should be understood that transmission in this application may be sending or receiving.

The transmission methods provided in embodiments of this application can be applied to a plurality of scenarios.

In a case in which the network device communicates with the terminal device through the plurality of transmission nodes, main application scenarios of embodiments of this application describe how the terminal device and the network device measure or transmit a reference signal and transmit a channel based on a single transmission node in a scenario in which the terminal device is indicated to be associated with only the single transmission node of the network device.

The case in which the terminal device is indicated to be associated with only the single transmission node is applicable to the following application scenarios:

Example scenario 1: Switching is performed from a first communication mode to a second communication mode.

The first communication mode is that the terminal device communicates with the plurality of transmission nodes separately by using a plurality of beams. The first communication mode can also be understood as follows: The terminal device communicates with the network device by using the plurality of beams, or the terminal device communicates with the network device through the plurality of transmission nodes.

The second communication mode indicates that the terminal device communicates with the single transmission node by using a single beam. The second communication mode can also be understood as follows: The terminal device communicates with the network device by using the single beam, or the terminal device communicates with the network device through the single transmission node.

The plurality of beams can be understood as a plurality of beams indicated to the terminal device. A beam in the plurality of beams may be an uplink/downlink common beam, or may be an uplink common beam and a downlink common beam.

The single beam can be understood as a single beam indicated to the terminal device. The single beam may be an uplink/downlink common beam, or may be an uplink common beam and a downlink common beam.

After the terminal device switches from the first communication mode to the second communication mode, the network device can communicate with the terminal device only through the single transmission node, and the terminal device communicates with the network device by using a specified transmission configuration indicator (transmission configuration indicator, TCI) state (TCI-state) or beam.

Optionally, the first communication mode is a multiple transmission and reception point mTRP mode, and the second communication mode is a single transmission and reception point sTRP mode. In a case in which the network device communicates with the terminal device through the single transmission node, main application scenarios of embodiments of this application describe how the terminal device and the network device measure or transmit a reference signal and transmit a channel based on the plurality of transmission nodes in a scenario in which the terminal device is indicated to be associated with the plurality of transmission nodes of the network device.

Example scenario 2: Switching is performed from a second communication mode to a first communication mode.

The first communication mode indicates that the terminal device communicates with the plurality of transmission nodes separately by using a plurality of beams. The second communication mode indicates that the terminal device communicates with the single transmission node by using a single beam.

After the terminal device switches from the second communication mode to the first communication mode, the network device can communicate with the terminal device through the plurality of transmission nodes, and the terminal device communicates with the network device by using a specified TCI-state or beam.

Optionally, the first communication mode is a multiple transmission and reception point mTRP mode, and the second communication mode is a single transmission and reception point sTRP mode.

At present, in the communication system 1000, the plurality of transmission nodes can simultaneously communicate with one terminal device. The plurality of transmission nodes need to indicate a plurality of beams to the terminal device, and each transmission node communicates with the terminal device by using one beam. When the terminal device is indicated to communicate with the single transmission node by using the single beam, a problem 1 exists: If the terminal device performs communication still based on beam information corresponding to the plurality of transmission nodes, resources are wasted.

For another example, in the communication system 1000, one transmission node can communicate with one terminal device, and one transmission node communicates with the terminal device by using one beam. The terminal device is reconfigured to communicate with the plurality of transmission nodes, and/or resources of the plurality of transmission nodes are reconfigured for the terminal device, and/or a parameter related to beam selection is configured for the terminal device. However, only one beam is indicated to the terminal device, and consequently the terminal device cannot perform normal transmission.

For another example, in the communication system 1000, the plurality of transmission nodes can simultaneously communicate with one terminal device. The plurality of transmission nodes need to indicate a plurality of beams to the terminal device, and each transmission node communicates with the terminal device by using one beam. The terminal device is reconfigured to communicate with the single transmission node, and/or a resource of the single transmission node is reconfigured for the terminal device, and/or a parameter related to beam selection is not configured for the terminal device. The terminal device cannot determine which beam in the plurality of beams is used to communicate with the single transmission node.

For another example, in the communication system 1000, one transmission node can communicate with one terminal device, and one transmission node communicates with the terminal device by using one beam. When the terminal device is indicated to perform communication by using a plurality of beams, but a parameter related to beam selection is not configured for the terminal device and/or only a resource of the single transmission node is configured for the terminal device, the terminal device cannot determine which beam in the plurality of beams is used to communicate with the single transmission node.

To resolve the foregoing problem 1, embodiments of this application provide a transmission method and a related apparatus. The transmission method is applied to the network devices (110a and 110b) or the terminal devices (120a to 120j) shown in FIG. 1a, or can be applied to a chip, a chip system, a processor, or the like that supports the foregoing network device or terminal device in implementing the foregoing method. The network device may include one or more transmission nodes.

For details, refer to FIG. 1d. FIG. 1d is a schematic flowchart of a transmission method according to an embodiment of this application. The method is mainly applied to a terminal device. The method specifically includes: S1: The terminal device receives first indication information, where the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam. S2: The terminal device determines a first beam based on the first indication information. S3: The terminal device measures or transmits a reference signal based on the first beam, or transmits a channel based on the first beam.

In this application, after receiving the first indication information sent by a network device, the terminal device may switch from the first communication mode to the second communication mode according to the indication of the first indication information, and transmit the reference signal or the channel based on the first beam associated with the single transmission node. This reduces a waste of resources and reduces overheads. In addition, after switching is performed from the first communication mode to the second communication mode, the reference signal or the channel is transmitted directly based on beam information associated with the single transmission node. This omits a beam information reconfiguration procedure and further reduces a transmission delay, compared with a case in which a reference signal or a channel can be transmitted only after associated beam information is reconfigured for a transmission node.

The foregoing describes an application scenario of the transmission method provided in this embodiment of this application. The following describes in detail an implementation process of the transmission method provided in this embodiment of this application.

For better understanding of solutions in embodiments of this application, the following first describes related terms and concepts that may be used in embodiments of this application.

### (1) Beam

A beam may be embodied in a new radio (new radio, NR) protocol as a spatial domain filter (spatial domain filter), or referred to as a spatial filter (spatial filter), a spatial domain parameter (spatial domain parameter), a spatial parameter (spatial parameter), a spatial domain setting (spatial domain setting), a spatial setting (spatial setting), quasi co-location (quasi co-location, QCL) information, a QCL assumption, a QCL indication, or the like. The beam may be indicated by using a transmission configuration indicator (transmission configuration indicator, TCI) state, namely, a TCI-state parameter, or may be indicated by using a spatial relation (spatial relation) parameter. Therefore, in this application, the beam may be replaced with a spatial domain filter, a spatial filter, a spatial domain parameter, a spatial parameter, a spatial domain setting, a spatial setting, QCL information, a QCL assumption, a QCL indication, a TCI-state (a DL TCI-state or a UL TCI-state), a spatial relation, or the like. The foregoing terms are also equivalent to each other. Alternatively, the beam may be replaced with other terms for representing a beam. This is not limited in this application.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI-state.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation (spatial relation), an uplink TCI-state, or an SRS resource (which indicates that an SRS transmission beam is used). Therefore, the uplink beam may be replaced with an SRS resource.

The transmission beam may be spatial distribution of signal strength formed in different directions after a signal is transmitted through an antenna, and the reception beam may be spatial distribution of signal strength, in different directions, of a radio signal received from an antenna.

In addition, a beam may be a wide beam, a narrow beam, or another type of beam. A technology for forming a beam may be a beamforming technology or another technology. The beamforming technology may be specifically a digital beamforming technology, an analog beamforming technology, a hybrid digital/analog beamforming technology, or the like.

A beam is usually corresponding to a resource. For example, during beam measurement, a network device measures different beams by using different resources, a terminal device feeds back measured resource quality, and then the network device learns quality of a corresponding beam. During data transmission, beam information is also indicated by using a resource corresponding to the beam information. For example, the network device may indicate PDSCH beam information of the terminal device by using a TCI field in downlink control information DCI.

Optionally, a plurality of beams having same or similar communication characteristics are considered as one beam. One beam may be corresponding to one or more antenna ports, configured to transmit a data channel, a control channel, a sounding reference signal, and the like. The one or more antenna ports corresponding to the beam may also be considered as one antenna port set.

During beam measurement, each beam of the network device is corresponding to one resource. Therefore, an index of a resource can uniquely identify a beam corresponding to the resource.

### (2) Reference signal (reference signal, RS)

According to a protocol of a long term evolution (long term evolution, LTE) system/new radio (new radio, NR) system, at a physical layer, uplink communication includes transmission of uplink physical channels and uplink signals. The uplink physical channels include a physical random access channel (physical random access channel, PRACH), a physical uplink control channel (physical uplink control channel, PUCCH), a physical uplink shared channel PUSCH, and the like. The uplink signals include a sounding reference signal SRS, an uplink control channel demodulation reference signal (PUCCH demodulation reference signal, PUCCH-DMRS), an uplink data channel demodulation reference signal (PUSCH demodulation reference signal, PUSCH-DMRS), an uplink phase noise tracking signal (phase noise tracking reference signal, PTRS), an uplink positioning signal (uplink positioning RS), and the like. Downlink communication includes transmission of downlink physical channels and downlink signals. The downlink physical channels include a broadcast channel (physical broadcast channel, PBCH), a downlink control channel (physical downlink control channel, PDCCH), a PDSCH, and the like. The downlink signals include a primary synchronization signal (primary synchronization signal, PSS for short)/secondary synchronization signal (secondary synchronization signal, SSS), a downlink control channel demodulation reference signal (PDCCH demodulation reference signal, PDCCH-DMRS), a downlink data channel demodulation reference signal (PDSCH demodulation reference signal, PDSCH-DMRS), a phase noise tracking signal PTRS, a channel state information-reference signal CSI-RS, a cell signal (Cell reference signal, CRS) (there is no CRS in an NR system, but there is a CRS in an LTE system), a time-frequency tracking reference signal (tracking reference signal, TRS) (there is no TRS in LTE, but there is a TRS in the NR system), an LTE/NR positioning signal (positioning RS), and the like.

### (3) TCI

A network device may generate different beams that point to different transmission directions. In downlink data transmission, when sending data to a terminal device by using a specified beam, the network device needs to notify the terminal device of information about the transmission beam used by the network device. In this way, the terminal device can receive, by using a reception beam corresponding to the transmission beam, the data sent by the network device. In the 3rd Generation Partnership Project release 15 (3rd generation partnership project release 15, 3GPP R15) protocol or the 3GPP R16 protocol, the network device indicates, to the terminal device by using a transmission configuration index (transmission configuration index, TCI) field in DCI, related information of the transmission beam used by the network device.

Specifically, a size of the TCI field is three bits, and may specifically represent eight different field values (code points). Each value of the TCI field is corresponding to one TCI-state index, and the TCI-state index can uniquely identify a TCI-state. The TCI-state includes several parameters, and the related information of the transmission beam may be determined based on these parameters. The TCI-state is configured by the network device for each terminal device.

Configuration information of each TCI-state includes an index tci-StateId of the TCI-state and two pieces of QCL-Info. Each piece of QCL-Info includes a cell field and a bwp-Id that respectively indicate a specific cell (cell) and a specific BWP (Bandwidth part) to which the TCI-state is applied. In other words, different QCL-Info may be configured for different cells or different BWPs of a same cell. The QCL-Info further includes a reference signal (reference signal) for indicating a specific reference signal resource with which a QCL relation is established.

In the R15/R16 protocol, the term "beam" is usually not directly used, and the beam is usually replaced with other terms. For example, in both data transmission and channel measurement, a beam is corresponding to a reference signal resource, and one beam is corresponding to one reference signal resource. Therefore, establishing a QCL relation with a specific reference signal resource herein essentially means establishing a QCL relation with a specific beam. The QCL relation means that two reference signal resources (or two antenna ports, where antenna ports are also in one-to-one correspondence with reference signal resources) have some same spatial parameters. Specifically, which spatial parameters are the same depends on a type of QCL-Info, that is, another field qcl-Type of the QCL-Info. There may be four values for the qcl-Type: {typeA, typeB, typeC, typeD}. TypeD is used as an example. TypeD indicates that the two reference signal resources have same spatial reception parameter information, that is, two beams have a same reception beam. A maximum of one of the two pieces of QCL-Info included in the TCI-state can be of TypeD.

The following uses an example to describe in detail how the network device indicates reception beam information of a data transmission beam to one terminal device based on the R15/R16 protocol by using the TCI-state. The process includes TCI-state configuration, activation, and indication.

TCI-state configuration: The network device configures a plurality of TCI-states for the terminal device by using resource control (radio resource control, RRC) signaling.

TCI-state activation: After configuring the plurality of TCI-states, the network device further needs to activate eight of the TCI-states by using a MAC CE. The eight TCI-states are in one-to-one correspondence with eight values of the TCI field in the DCI. To be specific, the specific eight TCI-states corresponding to the eight values of the TCI field in the DCI are determined by using the MAC CE signaling.

It should be noted that there are many types of MAC CEs. In addition to the MAC CE used for TCI-state activation, there are many MAC CEs used for other purposes. This application relates only to a MAC CE used to activate a TCI-state/TCI-state combination. Therefore, unless otherwise specified, MAC CEs in this application are such MAC CEs.

TCI-state indication: The network device indicates a specific TCI-state by using the TCI field in the DCI. For example, a value of the TCI field in the DCI sent by the network device to the terminal device is 000, indicating that a TCI-state corresponding to 000 is used for the data transmission beam. A reference signal included in the QCL-Info whose type is typeD in the TCI-state is a CSI-RS (Channel State Information-Reference Signal, channel state information-reference signal) whose index is #1, indicating that the beam used for data transmission is the same as a reception beam corresponding to the CSI-RS whose index is #1. The reception beam corresponding to the CSI-RS whose index is #1 may be determined through a beam measurement procedure, and is known to the terminal device. Therefore, the terminal device can determine, based on the specific value of the TCI field, the reception beam corresponding to the data transmission beam, to receive data by using the corresponding reception beam.

### (4) R17 unified TCI

A unified TCI is introduced in R17. The unified TCI (common beam) is a unified beam indication framework. A network device may indicate one beam to a terminal device, where the beam is used for a plurality of channels and/or reference signals. The common beam may be an uplink common beam, a downlink common beam, or an uplink/downlink common beam, and the terminal device may use the common beam in subsequent transmission. To be specific, the network device may indicate an uplink common beam to the terminal device, to transmit a plurality of uplink channels and/or uplink reference signals; may indicate a downlink common beam to the terminal device, to transmit a plurality of downlink channels and/or downlink reference signals; or may indicate an uplink/downlink common beam to the terminal device, to transmit a plurality of uplink channels and/or uplink reference signals and a plurality of downlink channels and/or downlink reference signals. In other words, the uplink/downlink common beam may be used for both uplink transmission and downlink transmission.

In R17, two TCI-states may be configured for the terminal device: a DL or joint TCI and a UL TCI.

(A maximum of 128) joint/DL TCI-states and (a maximum of 64) UL TCI-states can be configured for the UE simultaneously.

In a serving cell config configuration of RRC signaling, the base station may configure a TCI mode currently used by the UE to be a joint mode or a separate mode. In the joint mode, a joint TCI-state can be used for both uplink and downlink transmission. In the separate mode, the base station needs to indicate that a DL TCI-state and a UL TCI-state are used respectively for uplink and downlink transmission.

Optionally, when the UE receives TCI-state activation signaling indicated by a MAC CE, where the activation signaling includes identifiers (identifiers, ID) of TCI-states, the UE determines, based on the RRC configuration, which TCI is activated by using the MAC CE.

If the UE is configured to use the joint mode through RRC, the TCI-state ID is an ID of the joint TCI-state; or if the UE is configured to use the separate mode through RRC, the UE determines, based on a value of a D/L field, whether the TCI-state ID is an ID of the DL TCI-state or an ID of the UL TCI-state (specifically, 0 indicates a UL TCI, and 1 indicates a DL TCI).

### (5) Rel-18 mTRP unified TCI framework

A unified TCI framework in an mTRP (multiple transmission and reception point, multiple transmission and reception point) scenario is enhanced in Rel-18. The mTRP is a transmission technology similar to the LTE CoMP (coordinated multipoint), and allows a network to transmit data (a service) for one user through a plurality of nodes (a plurality of antennas, a plurality of stations, or a plurality of transceiver units). In a multi-station transmission scenario, a network device needs to indicate a plurality of common beams to a terminal device for multi-station transmission. As shown in FIG. 1d, two base stations simultaneously transmit signals to the terminal device, and each base station uses one common beam. The network devices need to indicate, to the terminal device, common beams corresponding to the two stations. After receiving the two common beams, the terminal device needs to further determine how the two common beams are applied to transmission of each channel or reference signal.

The mTRP scenario is further classified into a single downlink control information (single DCI, sDCI) mTRP and a multiple downlink control information (multi-DCI, mDCI) mTRP. The sDCI mTRP means that when ideal backhaul is performed between two nodes that simultaneously serve a user (that is, an information exchange delay between the two nodes can be ignored), the two nodes can jointly serve the UE with tight coordination. In this case, one of the two nodes implements unified/joint scheduling for the UE by sending DCI. Therefore, the DCI needs to be sent only once, and the DCI indicates beams used by the UE to receive data from the two nodes (that is, the two beams are respectively used for the two nodes). The mDCI mTRP means that when no ideal backhaul is performed between two nodes (the nodes are TRPs) that simultaneously serve a user (that is, an information exchange delay between the two nodes is large and cannot be ignored), the two nodes cannot jointly serve the UE with tight coordination. In this case, the two nodes need to independently perform scheduling for the UE. Because of independent scheduling, the two nodes need to independently send DCI commands to the UE for scheduling, and resource allocation and beam indication of the two nodes are separately delivered by using two pieces of independent DCI.

### (6) Timing advance

There is a delay in spatial transmission of a signal, and a signal sent by a terminal device located at a longer distance from a network device arrives at the network device with a longer delay. Different terminal devices are located at different distances from the network device. Therefore, signals sent by the different terminal devices arrive at the network device with different time differences. In this way, when the terminal devices receive downlink information sent by the network device and then send uplink signals, the uplink signals arrive at the network device at different moments.

To ensure orthogonality of uplink transmission and avoid intra-cell (intra-cell) interference, the network device requires that signals of different terminal devices that are from a same subframe but on different frequency domain resources arrive at the network device at basically aligned times, and the network device can correctly receive uplink data sent by the terminal devices, provided that the arrival times fall within a cyclic prefix (cyclic prefix, CP) range. Therefore, compared with downlink receiving, uplink sending of the terminal devices needs timing advances, and timing advances (Timing advances, TAs) of different terminal devices are different. In this way, the network device can receive signals of the different terminal devices within the CP range. A group of serving cells may be configured for the UE, where serving cells having a same uplink timing or a same TA are in a same timing advance group (timing advance group, TAG), and are provided with a same TAG ID.

This application provides a transmission method. For ease of understanding, with reference to the accompanying drawings and application scenarios, the following describes in detail the transmission methods provided in embodiments of this application. A person of ordinary skill in the art can know that, as technologies develop and new scenarios emerge, the technical solutions provided in embodiments of this application are also applicable to similar technical issues.

Based on different types of reference signals or channels, embodiments of this application include a plurality of implementations. The following describes the following steps by using examples in which the reference signals include a CSI-RS and an SRS, and the channels include a PDSCH scheduled by a format of first DCI and a PUSCH scheduled by using second DCI. It should be understood that the types of the reference signals or channels mentioned above are merely several common types. In embodiments of this application, the foregoing reference signals or channels are used as an example to specifically describe the transmission methods in embodiments of this application. In actual application, different types of reference signals or channels may be selected for communication depending on an actual requirement. This is not limited herein.

For ease of description, in embodiments of this application, that a terminal device communicates with two transmission nodes separately by using two beams is used as an example for description. In addition, it is assumed that one transmission node is corresponding to one network device, and the first beam is corresponding to a first TCI-state. In actual application, a quantity of transmission nodes, a correspondence between a transmission node and a network device, and application scenarios of embodiments may all be set depending on an actual requirement. Embodiments are merely examples for description, and do not constitute any limitation.

It can be understood that in a communication mode for a plurality of transmission nodes, the network device may communicate with one terminal device by using the plurality of transmission nodes (antennas, stations, or transceiver units). The plurality of transmission nodes may be respectively corresponding to a plurality of network devices, or some transmission nodes are corresponding to one network device and the other transmission nodes are corresponding to other network devices. This is not limited herein.

In addition, embodiments can be applied to a plurality of scenarios, for example, the foregoing example scenario 1 and example scenario 2, or other scenarios. This is not limited in embodiments.
(a) Implementation 1: The reference signal is a CSI-RS.

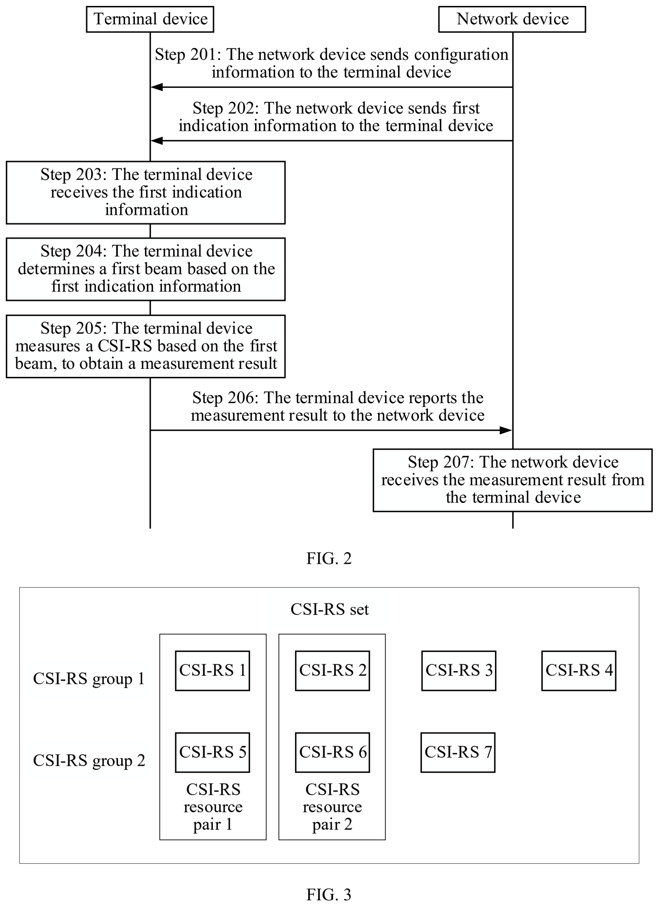

FIG. 2 is another schematic flowchart of a transmission method according to an embodiment of this application. The transmission method may be performed by the terminal device and the network device shown in FIG. 1a. As shown in FIG. 2, the transmission method includes one or more of step 201 to step 207.

Step 201: The network device sends configuration information to the terminal device.

In this embodiment, in a process in which the network device and the terminal device communicate with each other, the network device delivers the configuration information to the terminal device, so that the terminal device configures a related resource based on the configuration information. The configuration information includes CSI-RS resource configuration and reporting manners.

The configuration information further includes a correspondence between a channel or a reference signal and a plurality of (pairs of) unified TCI-states (unified TCI-states), and the like. When the terminal device is configured to use a joint (joint) mode, that is, when a same beam is used for both uplink transmission and downlink transmission between a transmission node and the terminal device, the configuration information includes a correspondence between a channel or a reference signal and two unified TCI-states. Each unified TCI-state is a downlink/joint TCI-state (joint/DL TCI-state), the joint/DL TCI-state may be referred to as a joint TCI-state, and a beam corresponding to the joint TCI-state is used as the beam used by the terminal device to perform downlink transmission and uplink transmission. When the terminal device is configured to use a separate (separate) mode, that is, when different beams are used for uplink transmission and downlink transmission between a transmission node and the terminal device, the configuration information includes a correspondence between a channel or a reference signal and two pairs of unified TCI-states. Each pair of unified TCI-states includes one joint/DL TCI-state and one uplink TCI-state (UL TCI-state). The joint/DL TCI-state may be referred to as a DL TCI-state, a beam corresponding to the DL TCI-state is used as a beam used by the terminal device to perform uplink transmission, and a beam corresponding to the UL TCI-state is used as a beam used by the terminal device to perform uplink transmission.

Optionally, the network device sends the configuration information to the terminal device by using RRC signaling.

In an optional implementation, the configuration information further includes first configuration information.

In this implementation, the first configuration information is used by the network device to indicate the CSI-RS resource configuration and reporting manners. Specifically, the first configuration information indicates the terminal device to report a second measurement result of K groups of CSI-RSs, K is greater than or equal to 0, a second measurement result of each group of CSI-RSs includes a measurement result of at least two CSI-RSs, and the at least two CSI-RSs are from different CSI-RS sets.

For example, an example in which the network device sends the configuration information to the terminal device by using RRC signaling is used to describe a manner in which the terminal device measures and reports the CSI-RS.

The first configuration information includes one or more CSI-RS sets (CSI-RS resource sets), and indicates, to the terminal device, which indicated joint/DL TCI-state is used for each CSI-RS set. For example, the network device indicates two joint/DL TCI-states to the terminal device. The first configuration information indicates, to the terminal device, whether an indicated first or second joint/DL TCI-state is used for each CSI-RS set. Two CSI-RS sets (CSI-RS resource sets) are used as an example. The first configuration information is used to configure the two CSI-RS sets (CSI-RS resource sets) to respectively correspond to beam measurement reference signals of two transmission nodes, and configure a first joint/DL TCI-state to be used for CSI-RSs in a CSI-RS set 1 (CSI-RS resource set 1) and a second joint/DL TCI-state to be used for CSI-RSs in a CSI-RS set 2 (CSI-RS resource set 2).

The reporting manner is group-based beam reporting (group-Based Beam Reporting), that is, reporting the second measurement result of the K groups of CSI-RSs. Each group of CSI-RSs includes two CSI-RSs, and the two CSI-RSs are from two CSI-RS sets and both may be received by the terminal device.

In another optional implementation, the configuration information may further include second configuration information.

In this implementation, the second configuration information is used by the network device to indicate a manner in which the terminal device measures and reports a CSI-RS used for non-coherent joint transmission (non-coherent joint transmission, NCJT). Specifically, the second configuration information indicates the terminal device to report a fourth measurement result of X CSI-RSs, X is greater than or equal to 0, and/or the second configuration information indicates the terminal device to report a fifth measurement result of one CSI-RS resource pair.

For example, an example in which the network device sends the configuration information to the terminal device by using RRC signaling is used to describe a manner in which the terminal device measures and reports the NCJT CSI-RS.

It is assumed that composition of a CSI-RS set is as follows:

```
          CSI-RS resource set
          {
          CSI-RS resource group 1
          CSI-RS resource group 2
          CSI-RS resource pair
                {
                       CSI-RS resource 1
                       CSI-RS resource 2
```

FIG. 3 is a diagram of composition of a CSI-RS set used for NCJT according to an embodiment of this application. As shown in FIG. 3, the second configuration information includes: one CSI-RS set (CSI-RS resource set) that includes two CSI-RS groups (CSI-RS groups) and one or two CSI-RS resource pairs (CSI-RS resource pairs). A CSI-RS group 1 includes K1 CSI-RSs (corresponding to a transmission node 1), a CSI-RS group 2 includes K2 CSI-RSs (corresponding to a transmission node 2), and each CSI-RS resource pair includes two CSI-RSs that are respectively from the CSI-RS group 1 and the CSI-RS group 2. An indicated first or second joint/DL TCI-state is used for each CSI-RS. When there is no configuration indicating whether an indicated first or second joint/DL TCI-state is used for each CSI-RS, the terminal device assumes that the first joint/DL TCI-state is used for the CSI-RS group 1, and the second joint/DL TCI-state is used for the CSI-RS group 2.

There are two reporting manners.

In a first manner, csi-ReportMode in RRC signaling is configured as Model or Mode2.

When csi-ReportMode is Model, the terminal device needs to report one piece of non-coherent joint transmission channel state information (non-coherent joint transmission channel state information, NCJT CSI) (namely, a fifth measurement result) and channel state information (channel state information, CSI) of X single transmission nodes (namely, a fourth measurement result, corresponding to a measurement result of CSI-RSs 1 to 7 included in FIG. 3), where X=0, 1, 2, and a value of X may be configured by using the RRC signaling. For example, the value of X is configured by using numberOfSingleTRP-CSI-Model in the RRC signaling. The NCJT CSI (the fifth measurement result) is corresponding to a measurement result of one CSI-RS resource pair in the one or two configured CSI-RS resource pairs, and each piece of NCJT CSI includes one CSI-RS resource indicator (CSI-RS resource indicator, CRI), two rank indicators (rank indicators, RIs), two precoding matrix indicators (precoding matrix indicators, PMIs), and one piece of channel quality information (Channel Quality Information, CQI); or one CRI, two RIs, two layer indicators (layer indicators, LIs), two PMIs, and one CQI. One CRI is corresponding to an index of the one or two configured CSI-RS resource pairs, that is, an index of a CSI-RS resource pair 1 or a CSI-RS resource pair 2. The CSI (the fourth measurement result) of the single transmission nodes is a measurement result of single CSI-RSs. CSI of each single transmission node includes one CRI, one RI, one PMI, and one CQI; or one CRI, one RI, one LI, one PMI, and one CQI. When X=0, the terminal device does not report the measurement result of the single CSI-RSs, that is, does not report the measurement result of the CSI-RSs 1 to 7. When X=1, a measurement result of one CSI-RS is selected from the two CSI-RS groups for reporting. According to FIG. 3, it can be understood that a measurement result of one CSI-RS is selected from {CSI-RS 1, CSI-RS 2, CSI-RS 3, CSI-RS 4} for reporting, or a measurement result of one CSI-RS is selected from {CSI-RS 5, CSI-RS 6, CSI-RS 7} for reporting. When X=2, measurement results of two CSI-RSs are respectively selected from the two CSI-RS groups for reporting. According to FIG. 3, it can be understood that a measurement result of one CSI-RS is selected from {CSI-RS 1, CSI-RS 2, CSI-RS 3, CSI-RS 4} and a measurement result of one CSI-RS is selected from {CSI-RS 5, CSI-RS 6, CSI-RS 7} for reporting.

When csi-ReportMode is Mode2, the terminal device needs to report one piece of NCJT CSI (namely, a fifth measurement result) or CSI of one single transmission node (namely, a fourth measurement result, corresponding to the CSI-RSs 1 to 7 included in FIG. 3), that is, a measurement result of one CSI-RS resource pair, a measurement result of one CSI RS in the CSI-RS group 1, or a measurement result of one CSI RS in the CSI-RS group 2.

In addition, when SharedCMR is configured through RRC, CSI-RSs corresponding to CSI of the single transmission nodes may be CSI-RSs in the CSI-RS resource pairs (that is, CSI-RSs in the CSI-RSs 1 to 7). When no SharedCMR is configured through RRC, CSI-RSs corresponding to CSI of the single transmission nodes cannot be CSI-RSs in the CSI-RS resource pairs (that is, the CSI-RSs can only be a measurement result of CSI-RSs in the CSI-RS 3, the CSI-RS 4, and the CSI-RS 7, but cannot be a measurement result of CSI-RSs in the CSI-RS 1, the CSI-RS 2, the CSI-RS 5, and the CSI-RS 6). For example, when the CSI-RS group 1 includes {CSI-RS 1, CSI-RS 2, CSI-RS 3, CSI-RS 4}, the CSI-RS group 2 includes {CSI-RS 5, CSI-RS 6, CSI-RS 7}, two CSI-RS resource pairs are configured, a resource pair 1 includes {CSI-RS 1, CSI-RS 5}, and a resource pair 2 includes {CSI-RS 2, CSI-RS 6 }, if SharedCMR is configured, resources corresponding to the CSI of the single transmission nodes may be {CSI-RS 1, CSI-RS 2, CSI-RS 3, CSI-RS 4, CSI-RS 5, CSI-RS 6, CSI-RS 7}. If no SharedCMR is configured, resources corresponding to the CSI of the single transmission nodes can only be {CSI-RS 3, CSI-RS 4, CSI-RS 7}.

In still another optional implementation, the configuration information may further include third configuration information.

The third configuration information indicates the terminal device to operate in a first communication mode, that is, indicates the terminal device to communicate with the network device through a plurality of transmission nodes. This also means indicating the terminal device to communicate with the network device by using a plurality of beams, or indicating the terminal device to communicate with the plurality of transmission nodes by using a plurality of beams.

Optionally, the third configuration information further includes a TCI selection related configuration parameter, which is used to configure a correspondence between a channel or a reference signal and two (pairs of) unified TCI-states (unified TCI-states).

In yet another optional implementation, the configuration information may further include fourth configuration information.

When the terminal device operates in a second communication mode, the fourth configuration information indicates the terminal device to switch from the second communication mode to the first communication mode.

Optionally, the fourth configuration information further includes a TCI selection related configuration parameter, which is used to configure a correspondence between a channel or a reference signal and two (pairs of) unified TCI-states (unified TCI-states).

The configuration information may include the CSI-RS resource configuration and reporting manners, and may further include any one or more of the first configuration information, the second configuration information, the third configuration information, and the fourth configuration information. The first configuration information and the second configuration information may implicitly indicate the terminal device to operate in the first communication mode, or implicitly indicate the terminal device to switch from the second communication mode to the first communication mode.

Optionally, this implementation further includes step 202. Step 202 may be performed before step 201, or may be performed after step 201.

Step 202: The network device sends first indication information to the terminal device.

In this embodiment, the first indication information may indicate beam information, and the beam information indicates the terminal device to communicate with the network device through a single transmission node by using an indicated beam.

It can be understood that in the 3GPP R15/R16 protocol, a TCI-state is configured by the network device for each terminal device, the TCI-state includes several parameters, and related information of a transmission beam may be determined based on these parameters. Therefore, in this embodiment, a TCI-state may be used to represent a beam used for communication between the network device and a terminal device, and the terminal device communicates with the network device by using the TCI-state specified by the network device. It can be understood that one TCI-state is corresponding to one beam.

In an optional implementation, the first indication information is carried in first MAC CE signaling.

The first MAC CE signaling is used to activate one or more TCI-states corresponding to one transmission node.

Optionally, when the terminal device operates in the second communication mode, the first MAC CE signaling is used to activate one or more TCI-states.

Optionally, when the terminal device operates in the first communication mode, only one or more TCI-states associated with one transmission node are activated by using the first MAC CE signaling. It can be understood that the first MAC CE activation TCI-state signaling includes only a first or second joint/DL/UL TCI-state, and implicitly indicates the terminal device to switch to the second communication mode.

Optionally, when the terminal device operates in the first communication mode, the first MAC CE signaling may include a field, and the field explicitly indicates the terminal device to switch from the first communication mode to the second communication mode.

In an optional implementation, the first indication information is carried in first MAC CE signaling and third DCI signaling.

If only one TCI-state is activated by using the first MAC CE signaling, the terminal device can determine the unique TCI-state to communicate with the network device, and the network device does not need to deliver the third DCI indication to further indicate a specific TCI-state used by the terminal device. If a plurality of TCI-states are activated by using the first MAC CE signaling, the network device needs to further deliver the third DCI indication to indicate a specific TCI-state used by the terminal device. In this case, optionally, the first indication information is carried in the first MAC CE signaling and the third DCI signaling, and the third DCI indicates the terminal device to communicate with the single transmission node by using a first beam.

That only one TCI-state is activated by using the first MAC CE signaling can be understood as follows: The TCI-state is corresponding to one code point. The code point is corresponding to one joint TCI-state, or one DL TCI-state and one UL TCI-state.

That the plurality of TCI-states are activated by using the first MAC CE signaling can be understood as follows: The plurality of TCI-states is corresponding to a plurality of code points. Each code point is corresponding to one joint TCI-state, or one DL TCI-state and one UL TCI-state.

Optionally, when the terminal device operates in the first communication mode, the third DCI signaling may include a field, and the field explicitly indicates the terminal device to switch from the first communication mode to the second communication mode.

It can be understood that the first MAC CE signaling may be redefined MAC CE signaling. Alternatively, existing MAC CE signaling may be used to activate the TCI-states by changing some information or rules in the MAC CE signaling. A specific form is not limited.

It can be understood that the third DCI signaling may be redefined DCI signaling. Alternatively, existing DCI beam indication signaling may be used.

Optionally, this implementation further includes step 202a. Step 202a may be performed before step 202, or may be performed after step 202.

Step 202a: The network device sends third indication information to the terminal device.

In an optional implementation, the third indication information is carried in second MAC CE signaling or fourth DCI signaling.

Optionally, when the terminal device operates in the first communication mode, the first indication information is carried in the second MAC CE signaling or the fourth DCI signaling, the second MAC CE signaling or the fourth DCI signaling may include a field, and the field explicitly indicates the terminal device to switch from the first communication mode to the second communication mode.

It can be understood that the second MAC CE signaling or the fourth DCI signaling may be redefined MAC CE or DCI signaling. Alternatively, existing MAC CE or DCI signaling may explicitly indicate, by changing some information or rules in the existing MAC CE or DCI signaling, the terminal device to switch from the first communication mode to the second communication mode.

Optionally, this implementation further includes step 203.

Step 203: The terminal device receives the first indication information.

In this embodiment, the terminal device receives the first indication information delivered by the network device, and determines, based on content in the first indication information, a specified TCI-state for communicating with the network device. The first indication information indicates the terminal device to communicate with the network device by using the specified TCI-state.

It can be understood that after receiving the first indication information delivered by the network device, the terminal device feeds back acknowledgment information to the network device, so that based on the acknowledgment information, the network device confirms that the terminal device receives the first indication information, and confirms that the network device and the terminal device communicate with each other by using the specified TCI-state.

In an optional implementation, when the terminal device operates in the first communication mode, after receiving the first indication information, the terminal device may determine, based on the first indication information, to switch from the first communication mode to the second communication mode.

In this optional implementation, optionally, an effective condition for the terminal device to switch from the first communication mode to the second communication mode is:
after a first time period in which the terminal device receives the first indication information and feeds back the acknowledgment information to the network device.

It can be understood that after receiving the first indication information, the terminal device switches from the first communication mode to the second communication mode, and needs to notify the network device that mode switching has been completed. Therefore, after receiving the first indication information, the terminal device feeds back the acknowledgment information to the network device. After receiving the acknowledgment message fed back by the terminal device, the network device confirms that the terminal device has switched to the second communication mode, and communicates with the terminal device according to a rule corresponding to the second communication mode.

If only one TCI-state is activated by using the first MAC CE signaling, the network device does not need to deliver the third DCI signaling indication to further indicate the specific TCI-state used by the terminal device. In this case, optionally, the effective condition for the terminal device to switch from the first communication mode to the second communication mode is: after the first time period in which the terminal device receives the MAC CE signaling and feeds back the acknowledgment message.

If the plurality of TCI-states are activated by using the first MAC CE signaling, the network device needs to further deliver the third DCI signaling indication to indicate the specific TCI-state used by the terminal device. In this case, optionally, the first indication information is carried in the first MAC CE signaling and the third DCI signaling, and the third DCI signaling indicates the terminal device to communicate with the single transmission node by using the first beam. In this case, optionally, the effective condition for the terminal device to switch from the first communication mode to the second communication mode is: after a second time period in which the terminal device receives the third DCI signaling and feeds back an acknowledgment message.

In another optional implementation, when the terminal device operates in the second communication mode, the terminal device determines, based on the first indication information, beam information for communication with the single transmission node.

In this implementation, the terminal device communicates with the single transmission node, the terminal device maintains only one beam, and the network device indicates, to the terminal device by using the first indication information, the beam information for communication with the single transmission node. Based on this, the terminal device determines, based on the first indication information, the beam information for communication with the single transmission node, and communicates with the network device based only on the beam information.

Optionally, this implementation further includes step 204.

Step 204: The terminal device determines the first beam based on the first indication information.

In this embodiment, the first indication information indicates the terminal device to communicate with the network device by using the specified TCI-state. After receiving the first indication information, the terminal device may determine, based on the first indication information, to communicate with the network device by using the specified first beam.

In an optional implementation, if the first indication information is carried in the first MAC CE signaling and the third DCI signaling, that the terminal device receives the first indication information includes one or more of the following:
the terminal device determines, based on the first MAC CE signaling, activated TCI-states for communication with the single transmission node;
when the terminal device operates in the first communication mode, the terminal device switches from the first communication mode to the second communication mode based on the first MAC CE signaling and/or the third DCI signaling; and
the terminal device determines the first beam based on the third DCI.

In this implementation, if only one TCI-state is activated by using the first MAC CE signaling, the network device does not need to deliver the third DCI indication to further indicate the specific TCI-state used by the terminal device.

When the terminal device operates in the first communication mode, the first MAC CE signaling may indicate the terminal device to switch from the first communication mode to the second communication mode, or may indicate one TCI-state for communication with the single transmission node.

When the terminal device operates in the second communication mode, the first MAC CE signaling indicates one TCI-state for communication with the single transmission node.

In this implementation, if the plurality of TCI-states are activated by using the first MAC CE signaling, the network device needs to further deliver the third DCI signaling indication to indicate the specific TCI-state used by the terminal device. In this case, the first indication information is carried in the first MAC CE signaling and the third DCI signaling.

When the terminal device operates in the first communication mode, the first MAC CE signaling may indicate the terminal device to switch from the first communication mode to the second communication mode, or may be used to activate the plurality of TCI-states associated with the single transmission node, and the third DCI signaling indicates the terminal device to communicate with the single transmission node by using the first beam.

When the terminal device operates in the second communication mode, the plurality of TCI-states are activated by using the first MAC CE signaling, and the third DCI indicates the terminal device to communicate with the single transmission node by using the first beam.

Optionally, this implementation further includes step 204a. Step 204a may be performed before step 204, or may be performed after step 204.

Step 204a: The terminal device determines, based on the third indication information, to switch from the first communication mode to the second communication mode.

When the terminal device operates in the first communication mode, after receiving the third indication information, the terminal device may determine, based on the third indication information, to switch from the first communication mode to the second communication mode.

In this optional implementation, optionally, the effective condition for the terminal device to switch from the first communication mode to the second communication mode is:
after the first time period in which the terminal device receives the third indication information and feeds back acknowledgment information to the network device.

Optionally, this implementation further includes step 205.

Step 205: The terminal device measures a CSI-RS based on the first beam, to obtain a measurement result.

In this embodiment, after determining, based on the first indication information, to communicate with the network device by using the first beam, the terminal device may select a corresponding manner based on a type of a reference signal or a channel and perform operations. When the reference signal is a CSI-RS, the terminal device measures the CSI-RS based on the first beam, to obtain the measurement result.

When the reference signal is a CSI-RS, the network device delivers the first configuration information to the terminal device. Based on this, in an optional implementation, a method for measuring the reference signal by the terminal device based on the first beam includes:
the terminal device determines, from the plurality of CSI-RS sets, a first CSI-RS set associated with the first beam; and
the terminal device measures only the first CSI-RS set to obtain a first measurement result.

In this implementation, after the terminal device measures only the reference signal indicated to use the first beam, assuming that the first beam is corresponding to a first TCI-state, the terminal device does not measure a CSI-RS set (CSI-RS resource set) associated with a second or another TCI-state, and measures only the CSI-RS set (CSI-RS resource set) associated with the first TCI-state. It can also be understood that the terminal device does not expect the network device to trigger the CSI-RS set associated with the second or another TCI-state. Alternatively, the terminal device does not expect to measure the CSI-RS set (CSI-RS resource set) associated with the second or another TCI-state.

When the terminal device measures, based on the first indication information, the CSI-RS indicated to use the first beam, the terminal device first determines, from the plurality of CSI-RS sets, the first CSI-RS set associated with the first beam, and then the terminal device measures only the first CSI-RS set associated with the first beam, without measuring the CSI-RS set (CSI-RS resource set) associated with the second or another TCI-state.

Optionally, the terminal device determines, from the plurality of CSI-RS sets, the first CSI-RS set associated with the first beam. That the terminal device measures only the first CSI-RS set to obtain the first measurement result may take effect in one or more of the following scenarios or conditions:
when the terminal device operates in the first communication mode, and the terminal device receives the first indication information sent by the network device;
when the terminal device operates in the second communication mode, and the terminal device receives any one or more of the first, third, and fourth configuration information sent by the network device;
when the terminal device operates in the second communication mode, after the terminal device receives any one or more of the first, third, and fourth configuration information sent by the network device, and before the terminal device receives new beam indication information, the beam indication information includes multi-beam information for the terminal device and the plurality of transmission nodes;
when the terminal device is indicated to communicate with the network device by using a beam or a TCI-state, but the network device configures a TCI-state selection related configuration parameter for the terminal device by using RRC signaling;
when the terminal device is indicated to communicate with the network device by using a beam or a TCI-state, but the network device indicates the terminal device to operate in the first communication mode;
when the terminal device is indicated to communicate with the network device by using a beam or a TCI-state, but the network device configures a reference signal or a channel of the terminal device to be transmitted based on one or both of two indicated TCI-states; and
when the terminal device receives any one or more of the first, third, and fourth configuration information of the network device, and receives the first indication information and/or second indication information sent by the network device.

It can be understood that, to reduce a waste of resources, after the terminal device is indicated to measure the reference signal only by using the first beam, the terminal device does not measure a reference signal associated with another beam or TCI-state. This reduces occupied resources.

It can also be understood that the terminal device ignores the TCI-state selection related configuration parameter configured by the network device through RRC, and the terminal device receives and measures the reference signal by using only the indicated first beam.

It can also be understood that the terminal device ignores a relationship between the one or more CSI-RS sets configured by the network device through RRC and the indicated first or second joint/DL TCI-state, and the terminal device receives and measures the reference signal by using only the indicated first beam.

When the reference signal is a CSI-RS used for NCJT channel measurement, the network device delivers the second configuration information to the terminal device. Based on this, in an optional implementation, when the configuration information includes the second configuration information, a method for measuring the reference signal by the terminal device based on the first beam includes:
the terminal device determines, from the CSI-RS set, a CSI-RS associated with the first beam; and
the terminal device measures only the CSI-RS associated with the first beam, to obtain a third measurement result.

In this implementation, after the terminal device measures only the reference signal indicated to use the first beam, assuming that the first beam is corresponding to a first TCI-state, the terminal device does not measure a CSI-RS associated with a second TCI-state, and measures only the CSI-RS associated with the first TCI-state. Alternatively, it can be understood that the terminal device does not expect the network device to trigger a CSI-RS set used for NCJT channel measurement. Alternatively, the terminal device does not expect to measure a CSI-RS set used for NCJT channel measurement. Further, when there is no configuration through RRC indicating whether the indicated first or second joint/DL TCI-state is used for each resource, the terminal device measures only the CSI-RS resources in the CSI-RS group 1, without measuring the CSI-RS resources in the CSI-RS group 2. Alternatively, it can be understood that the terminal device does not expect to measure the CSI-RS resources in the CSI-RS group 2.

When the terminal device measures, based on the first indication information, the NCJT CSI-RS indicated to use the first beam, the terminal device first determines, from the CSI-RS set, the CSI-RS associated with the first beam, and then the terminal device measures only the CSI-RS associated with the first beam, to obtain the third measurement result, without measuring the CSI-RS associated with the second or another TCI-state.

Optionally, the terminal device determines, from the CSI-RS set, the CSI-RS associated with the first beam. That the terminal device measures only the CSI-RS associated with the first beam, to obtain the third measurement result may take effect in one or more of the following scenarios or conditions:
when the terminal device operates in the first communication mode, and the terminal device receives the first indication information sent by the network device;
when the terminal device operates in the second communication mode, and the terminal device receives any one or more of the second, third, and fourth configuration information sent by the network device;
when the terminal device operates in the second communication mode, after the terminal device receives any one or more of the second, third, and fourth configuration information sent by the network device, and before the terminal device receives new beam indication information, the beam indication information includes multi-beam information for the terminal device and the plurality of transmission nodes;
when the terminal device is indicated to communicate with the network device by using a beam or a TCI-state, but the network device configures a TCI-state selection related configuration parameter for the terminal device by using RRC signaling;
when the terminal device is indicated to communicate with the network device by using a beam or a TCI-state, but the network device indicates the terminal device to operate in the first communication mode;
when the terminal device is indicated to communicate with the network device by using a beam or a TCI-state, but the network device configures a reference signal or a channel of the terminal device to be transmitted based on one or both of two indicated TCI-states; and
when the terminal device receives any one or more of the second, third, and fourth configuration information of the network device, and receives the first indication information and/or second indication information sent by the network device.

It can be understood that, to reduce a waste of resources, after the terminal device is indicated to measure the reference signal only by using the first beam, the terminal device does not measure a reference signal associated with another beam or TCI-state. This reduces occupied resources.

It can also be understood that the terminal device ignores the TCI-state selection related configuration parameter configured by the network device through RRC, and the terminal device receives and measures the reference signal CSI-RS by using only the indicated first beam.

It can also be understood that the terminal device ignores a relationship between the one or more CSI-RSs configured by the network device through RRC and the indicated first or second joint/DL TCI-state, and the terminal device receives and measures the reference signal CSI-RS by using only the indicated first beam.

Optionally, this implementation further includes step 206.

Step 206: The terminal device reports the measurement result to the network device.

In this embodiment, after measuring the reference signal by using the first beam, the terminal device reports the measurement result to the terminal device. The reported measurement result varies with different reference signals.

When the reference signal is a CSI-RS, the terminal device performs measurement reporting based on the first configuration information, where the first configuration information indicates the terminal device to report the second measurement result of the K groups of CSI-RSs, K is greater than or equal to 0, the second measurement result of each group of CSI-RSs includes the at least two CSI-RSs, and the at least two CSI-RSs are from different CSI-RS sets.

In correspondence to this embodiment, in an optional implementation, the terminal device reports only the first measurement result.

In this implementation, the first measurement result is a result of measuring only the first CSI-RS set by the terminal device. The first measurement result includes a second measurement result of M CSI-RSs, the M CSI-RSs for the second measurement result are all from the first CSI-RS set, and M is greater than or equal to 0. Specifically, the terminal device may report only the second measurement result of the M CSI-RSs and corresponding reference signal received power (Reference Signal Received Power, RSRP) strength, or the second measurement result of the M CSI-RSs, corresponding RSRP strength, and a capability parameter (set) index Capability[Set]Index, that is, the terminal device does not report the CSI-RS resource pairs. Alternatively, the second measurement result of the M CSI-RSs is corresponding to the CSI-RS set associated with the first TCI-state. M may be configured by the network device, and represents a quantity of resources to be reported by the terminal device. Alternatively, M may be specified by using a communication protocol between the network device and the terminal device. Alternatively, M may be 0, indicating that the terminal device does not perform reporting.

A value of M and a configuration manner may be set depending on an actual requirement. In this embodiment, K may be equal to M. It can be understood that a same value is configured for M and K, or it can be understood that a protocol specifies that a value of M is equal to that of K. Alternatively, K may be different from M, and the network device separately configures values of K and M.

Optionally, the first measurement result may be reported in one or more of the following scenarios or conditions:
when the terminal device operates in the first communication mode, and the terminal device receives the first indication information sent by the network device;
when the terminal device operates in the second communication mode, and the terminal device receives any one or more of the first, third, and fourth configuration information sent by the network device;
when the terminal device operates in the second communication mode, after the terminal device receives any one or more of the first, third, and fourth configuration information sent by the network device, and before the terminal device receives new beam indication information, the beam indication information includes multi-beam information for the terminal device and the plurality of transmission nodes;
when the terminal device is indicated to communicate with the network device by using a beam or a TCI-state, but the network device configures a TCI-state selection related configuration parameter for the terminal device by using RRC signaling;
when the terminal device is indicated to communicate with the network device by using a beam or a TCI-state, but the network device indicates the terminal device to operate in the first communication mode;
when the terminal device is indicated to communicate with the network device by using a beam or a TCI-state, but the network device configures a reference signal or a channel of the terminal device to be transmitted based on one or both of two indicated TCI-states; and
when the terminal device receives any one or more of the first, third, and fourth configuration information of the network device, and receives the first indication information and/or second indication information sent by the network device.

When the reference signal is a CSI-RS used for NCJT channel measurement, the terminal device performs measurement reporting based on the second configuration information, where the second configuration information indicates the terminal device to report the fourth measurement result of the X CSI-RSs, where X is greater than or equal to 0, and/or the second configuration information indicates the terminal device to report the fifth measurement result of one CSI-RS resource pair.

In correspondence to this embodiment, in an optional implementation, the terminal device reports only the third measurement result.

In this implementation, the third measurement result is a result of measuring, by the terminal device, only the CSI-RS associated with the first beam. In other words, the terminal device reports only a measurement result of the CSI-RS associated with the first TCI-state, that is, reports only a single CSI-RS associated with the first TCI-state. Alternatively, it can be understood that the terminal device neither reports the NCJT CSI nor reports CSI that is of a single transmission node and that is corresponding to the CSI-RS associated with the second or another TCI-state.

It is assumed that a specific reporting manner of the first TCI-state corresponding to the first beam is as follows.

When csi-ReportMode is configured as Model, and the configured numberOfSingleTRP-CSI-Model is X=0, the terminal device does not perform any reporting, that is, neither reports the NCJT CSI nor reports CSI of a single transmission node.

When csi-ReportMode is configured as Model, and the configured numberOfSingleTRP-CSI-Model is X=1, the terminal device reports only CSI that is of a single transmission node and that is corresponding to the CSI-RS associated with the first TCI-state, and reports corresponding one CRI, one RI, one PMI, and one CQI; or one CRI, one RI, one LI, one PMI, and one CQI. In other words, the terminal device neither reports the NCJT CSI nor chooses to report CSI that is of a single transmission node and that is corresponding to the CSI-RS associated with the second TCI-state.

When csi-ReportMode is Model, and the configured numberOfSingleTRP-CSI-Model is X=2, the terminal device reports only CSI that is of a single transmission node and that is corresponding to one CSI-RS associated with the first TCI-state, and reports corresponding one CRI, one RI, one PMI, and one CQI; or one CRI, one RI, one LI, one PMI, and one CQI. In other words, the terminal device neither reports the NCJT CSI nor needs to report CSI that is of a single transmission node and that is corresponding to the CSI-RS associated with the second TCI-state.

When csi-ReportMode is Mode2, the terminal device reports only CSI that is of a single transmission node and that is corresponding to the CSI-RS associated with the first TCI-state, and reports corresponding one CRI, one RI, one PMI, and one CQI; or one CRI, one RI, one LI, one PMI, and one CQI. In other words, the terminal device neither reports the NCJT CSI nor chooses to report CSI that is of a single transmission node and that is corresponding to the CSI-RS associated with the second TCI-state.

Optionally, when no sharedCMR is configured for the terminal device, if all CSI-RSs associated with the first TCI-state belong to the one or two CSI-RS resource pairs, that is, if all CSI-RSs corresponding to CSI of single transmission nodes that may be reported are associated with the second TCI-state, the terminal device may not perform reporting. Certainly, the terminal device may be configured or specified to report CSI that is of a single transmission node and that is corresponding to one CSI-RS associated with the first TCI-state.

Further, the terminal device needs to determine, based on whether the CSI-RS associated with the first TCI-state belongs to the CSI-RS group 1 or the CSI-RS group 2, whether the reported PMI is selected from type1-SinglePanel-Group1 or typel-SinglePanel-Group2. When the CSI-RS associated with the first TCI-state belongs to the CSI-RS group 1, the reported PMI belongs to typel-SinglePanel-Groupl. When the CSI-RS associated with the first TCI-state belongs to the CSI-RS group 2, the reported PMI belongs to typel-SinglePanel-Group2.

Optionally, the second measurement result may be reported in one or more of the following scenarios or conditions:
when the terminal device operates in the first communication mode, and the terminal device receives the first indication information sent by the network device;
when the terminal device operates in the second communication mode, and the terminal device receives any one or more of the second, third, and fourth configuration information sent by the network device;
when the terminal device operates in the second communication mode, after the terminal device receives any one or more of the second, third, and fourth configuration information sent by the network device, and before the terminal device receives new beam indication information, the beam indication information includes multi-beam information for the terminal device and the plurality of transmission nodes;
when the terminal device is indicated to communicate with the network device by using a beam or a TCI-state, but the network device configures a TCI-state selection related configuration parameter for the terminal device by using RRC signaling;
when the terminal device is indicated to communicate with the network device by using a beam or a TCI-state, but the network device indicates the terminal device to operate in the first communication mode;
when the terminal device is indicated to communicate with the network device by using a beam or a TCI-state, but the network device configures a reference signal or a channel of the terminal device to be transmitted based on one or both of two indicated TCI-states; and
when the terminal device receives any one or more of the second, third, and fourth configuration information of the network device, and receives the first indication information and/or second indication information sent by the network device.

Step 207: The network device receives the measurement result from the terminal device.

It should be noted that the foregoing measurement and reporting rules mentioned in this embodiment may be specified by using the communication protocol between the network device and the terminal device, may be configured by using RRC signaling, or may be set in another manner. This is not limited herein.

After the terminal device is indicated, based on the first indication information, to measure the reference signal by using the specified first beam, the terminal device may measure the reference signal and report the measurement result by using the foregoing rollback rules, and ignore the TCI selection related parameter configured through RRC.

(b) Implementation 2: The reference signal is an SRS.

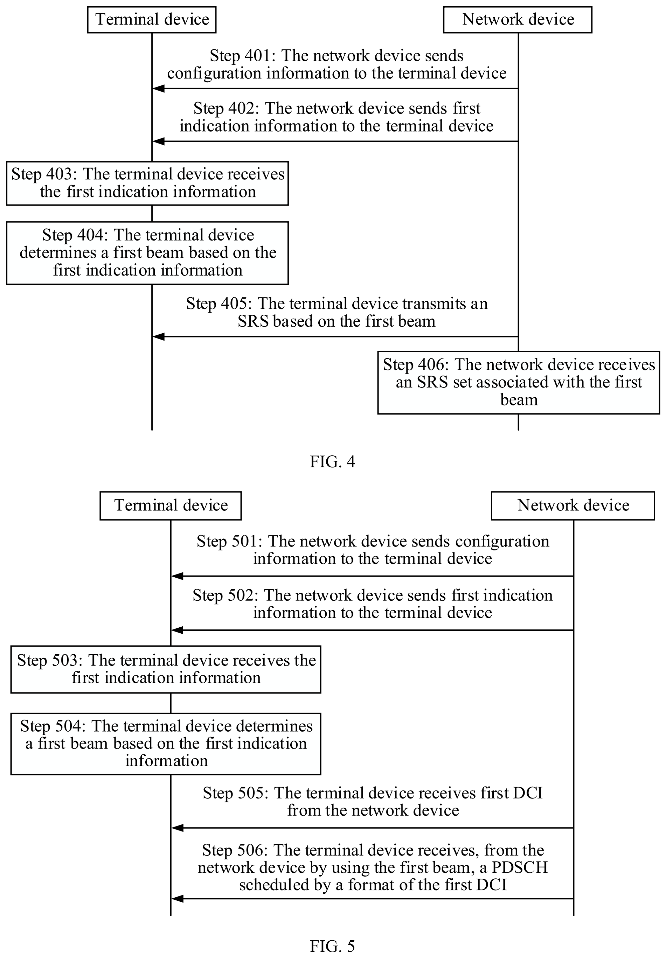

FIG. 4 is another schematic flowchart of a transmission method according to an embodiment of this application. The transmission method may be performed by the terminal device and the network device shown in FIG. 1a. As shown in FIG. 4, the transmission method includes one or more of step 401 to step 406.

Step 401: The network device sends configuration information to the terminal device.

In an optional implementation, the configuration information further includes fifth configuration information.

In this implementation, the fifth configuration information is used to associate a plurality of beams respectively with a plurality of SRS sets. Two SRS resource sets are used as an example. It can be understood that the network device configures the two SRS resource sets for the terminal device, where the two SRS resource sets are respectively associated with indicated first and second joint/UL TCI-states.

In an optional implementation, the configuration information further includes third configuration information.

In an optional implementation, the configuration information further includes fourth configuration information.

Optionally, this implementation further includes step 402. Step 402 may be performed before step 401, or may be performed after step 401.

Step 402: The network device sends first indication information to the terminal device.

Optionally, this implementation further includes step 402a. Step 402a may be performed before step 402, or may be performed after step 402.

Step 402a: The network device sends third indication information to the terminal device.

Optionally, this implementation further includes step 403.

Step 403: The terminal device receives the first indication information.

Optionally, this implementation further includes step 404.

Step 404: The terminal device determines a first beam based on the first indication information.

Optionally, this implementation further includes step 404a. Step 404a may be performed before step 404, or may be performed after step 404.

Step 404a: The terminal device determines, based on the third indication information, to switch from a first communication mode to a second communication mode.

It can be understood that for specific descriptions of step 401 to step 404a, refer to step 201 to step 204a shown in FIG. 2. Only a related implementation when the reference signal is an SRS is described herein.

Step 405: The terminal device transmits an SRS based on the first beam.

In this embodiment, after receiving the first indication information, the terminal device determines, based on the first information, to communicate with a single transmission node of the network device by using the specified first beam.

It can be understood that, in an example scenario, the terminal device switches from the first communication mode to the second communication mode based on the first indication information, and the terminal device communicates with the single transmission node by using the first beam. When the reference signal is an SRS, the terminal device may choose to send only an SRS resource associated with the first beam. This reduces a waste of resources, compared with sending SRS resources associated with all transmission nodes.

In another example scenario, the terminal device operates in the second communication mode, and the terminal device communicates with the single transmission node by using a single beam. When the terminal device receives any one or more of the third, fourth, and fifth configuration information, it can be understood that the network device configures the communication mode for a plurality of transmission nodes, configures multi-beam communication, or configures the plurality of SRS sets associated with the plurality of beams, but only one beam is indicated to the terminal device. When the reference signal is an SRS, the terminal device may send the SRS by using the first beam, and ignore a TCI selection related parameter and the like configured through RRC.

In an optional implementation, a specific implementation of transmitting, by the terminal device, the reference signal based on the first beam includes:
the terminal device determines, from the plurality of SRS sets, an SRS set associated with the first beam, and sends only the SRS set associated with the first beam.

In this implementation, the terminal device sends only the SRS set associated with the first beam. It is assumed that the first beam is corresponding to a first TCI-state. It can be understood that the terminal device does not expect the network device to trigger a semi-persistent SRS set (Semi-Persistent SRS resource set) or an aperiodic SRS set (aperiodic SRS resource set) associated with a second or another TCI-state, or the terminal device does not expect to send a periodic SRS set associated with a second or another TCI-state.

Optionally, the terminal device may transmit the SRS based on the first beam when one or more of the following scenarios or conditions are satisfied:
when the terminal device operates in the first communication mode, and the terminal device receives the first indication information sent by the network device;
when the terminal device operates in the second communication mode, and the terminal device receives any one or more of the third, fourth, and fifth configuration information sent by the network device;
when the terminal device operates in the second communication mode, after the terminal device receives any one or more of the third, fourth, and fifth configuration information sent by the network device, and before the terminal device receives new beam indication information, the beam indication information includes multi-beam information for the terminal device and the plurality of transmission nodes;
when the terminal device is indicated to communicate with the network device by using a beam or a TCI-state, but the network device configures a TCI-state selection related configuration parameter for the terminal device by using RRC signaling;
when the terminal device is indicated to communicate with the network device by using a beam or a TCI-state, but the network device indicates the terminal device to operate in the first communication mode;
when the terminal device is indicated to communicate with the network device by using a beam or a TCI-state, but the network device configures a reference signal or a channel of the terminal device to be transmitted based on one or both of two indicated TCI-states; and
when the terminal device receives any one or more of the third, fourth, and fifth configuration information of the network device, and receives the first indication information and/or second indication information sent by the network device.

Step 406: The network device receives the SRS set associated with the first beam.

It should be noted that the SRS sending rules mentioned in this embodiment may be specified by using a communication protocol between the network device and the terminal device, may be configured by using RRC signaling, or may be set in another manner. This is not limited herein.

After the terminal device is indicated, based on the first indication information, to send the SRS by using the specified first beam, the terminal device may send the SRS by using the foregoing rollback rules, and ignore the TCI selection related parameter configured through RRC.

(c) Implementation 3: The channel is a PDSCH scheduled by a format of first DCI.

FIG. 5 is another schematic flowchart of a transmission method according to an embodiment of this application. The transmission method may be performed by the terminal device and the network device shown in FIG. 1a. As shown in FIG. 5, the transmission method includes step 501 to step 506.

Step 501: The network device sends configuration information to the terminal device. In an optional implementation, the configuration information further includes third configuration information.

In an optional implementation, the configuration information further includes fourth configuration information.

Optionally, this implementation further includes step 502. Step 502 may be performed before step 501, or may be performed after step 501. Step 502: The network device sends first indication information to the terminal device.

Optionally, this implementation further includes step 502a. Step 502a may be performed before step 502, or may be performed after step 502.

Step 502a: The network device sends third indication information to the terminal device.

Optionally, this implementation further includes step 503.

Step 503: The terminal device receives the first indication information.

Optionally, this implementation further includes step 504. Step 504: The terminal device determines a first beam based on the first indication information.

Optionally, this implementation further includes step 504a. Step 504a may be performed before step 504, or may be performed after step 504.

Step 504a: The terminal device determines, based on the third indication information, to switch from a first communication mode to a second communication mode.

It can be understood that for specific descriptions of step 501 to step 504, refer to step 201 to step 204 shown in FIG. 2. Details are not described herein again.

Step 505: The terminal device receives the first DCI from the network device.

In this embodiment, after determining the first beam based on the first indication information, the terminal device receives the first DCI from the network device, where the first DCI is used for scheduling the PDSCH.

In an optional implementation, the terminal device receives, by using the first beam, the PDSCH scheduled by the format of the first DCI.

In this implementation, after determining the first beam based on the first indication information, the terminal device receives, based on the first beam indicated in the first indication information, the PDSCH scheduled by the format of the first DCI.

In correspondence to an actual operation, this implementation is generally corresponding to a PDSCH scheduled by DCI 1_1/1_2 that does not include a TCI selection field. It is assumed that when the terminal device is in the first communication mode, the terminal device receives the PDSCH by using indicated two joint/DL TCI-states. After receiving the first indication information sent by the network device, the terminal device may receive the PDSCH by using the first beam indicated in the first indication information.

In another optional implementation, the first DCI includes a first field, and the first field indicates that the terminal device is in the second communication mode, or the first field indicates that the terminal device receives the PDSCH by using the first beam. The terminal device receives, by using the first beam, the PDSCH scheduled by the format of the first DCI.

This implementation is generally corresponding to a PDSCH scheduled by DCI 1_1/1_2 that includes a TCI selection field. In the first communication mode, it is assumed that the network device indicates, by using the first field, whether a first or second joint/DL TCI-state is used for the currently scheduled PDSCH. After receiving the first indication information sent by the network device, the terminal device may perform a corresponding operation by using information indicated by the first field.

Optionally, the first field is the TCI selection field.

The network device indicates, based on 00/01/10 of the TCI selection field, whether the first or second joint/DL TCI-state, or the two joint/DL TCI-states are used for the currently scheduled PDSCH. After any one or more of the following conditions 1 to 7 are satisfied, the terminal device may process the TCI selection field by using one or more of the following methods:

The network device may set the TCI selection field to 11, to indicate that the terminal device is in the second communication mode, or to indicate that the terminal device has switched from the first communication mode to the second communication mode.

Alternatively, after the terminal device switches to the second communication mode based on the first indication information, the terminal device is restricted to not parse the field, or it is considered that the field is meaningless.

Alternatively, in a communication protocol between the terminal device and the communication device, the field is restricted to be "00" or "01", and needs to remain corresponding to the first TCI-state or the second TCI-state that is activated by using the first indication information.

The conditions 1 to 7 are as follows:
condition 1: when the terminal device operates in the first communication mode, and the terminal device receives the first indication information sent by the network device;
condition 2: when the terminal device operates in the second communication mode, and the terminal device receives any one or more of the third and fourth configuration information sent by the network device;
condition 3: when the terminal device operates in the second communication mode, after the terminal device receives any one or more of the third and fourth configuration information sent by the network device, and before the terminal device receives new beam indication information, the beam indication information includes multi-beam information for the terminal device and a plurality of transmission nodes;
condition 4: when the terminal device is indicated to communicate with the network device by using a beam or a TCI-state, but the network device configures a TCI-state selection related configuration parameter for the terminal device by using RRC signaling;
condition 5: when the terminal device is indicated to communicate with the network device by using a beam or a TCI-state, but the network device indicates the terminal device to operate in the first communication mode;
condition 6: when the terminal device is indicated to communicate with the network device by using a beam or a TCI-state, but the network device configures a channel or a reference signal of the terminal device to be transmitted based on one or both of two indicated TCI-states; and
condition 7: when the terminal device receives any one or more of the third and fourth configuration information of the network device, and receives the first indication information and/or second indication information sent by the network device.

It can be understood that a rule of the first field may be set by the terminal device depending on an actual requirement. This is not limited herein.

In another optional implementation, a type of the PDSCH is a PDSCH scheduled by first DCI 1_0.

In this implementation, a specific method for receiving, by the terminal device, the PDSCH scheduled by the DCI 1_0 format is as follows:
after receiving the first indication information sent by the network device, the terminal device receives, based on the first beam indicated in the first indication information, the PDSCH scheduled by the first DCI 1_0 format.

When any one or more of the foregoing conditions 1 to 7 are satisfied, in the communication protocol between the network device and the terminal device, the network device may be restricted to not schedule a PDSCH associated with an inactive TCI-state or associated with two joint/UL TCI-states. For example, it is assumed that the first beam is corresponding to the first TCI-state. When the terminal device switches to the second communication mode, the first TCI-state is activated by using the first indication information sent by the network device. In this case, the terminal device does not expect the network device to schedule a PDSCH associated with the second or another TCI-state, and the terminal device does not expect the network device to schedule a PDSCH associated with the two joint/UL TCI-states. For another example, when the network device operates in the second communication mode, the network device communicates with the network device by using a single beam. When the network device sends RRC to configure the terminal device to operate in the first communication mode, or sends RRC to configure the PDSCH to be associated with the first or second joint/DL TCI-state, or the two joint/DL TCI-states, the terminal device receives, by using the first beam indicated in the first indication information, the PDSCH scheduled by the first DCI 1_0 format, before receiving multi-beam indication signaling.

Step 506: The terminal device receives, from the network device by using the first beam, the PDSCH scheduled by the format of the first DCI.

In this embodiment, the terminal device receives, from the network device by using the first beam, the PDSCH scheduled by the format of the first DCI. Assuming that the first beam is corresponding to the first TCI-state, in the communication protocol between the network device and the terminal device, the terminal device may be restricted to not expect to receive, by using the second or another TCI-state, the PDSCH scheduled by the format of the first DCI.

Optionally, when one or more of the following scenarios or conditions are satisfied, the terminal device may receive, by using the first beam, the PDSCH scheduled by the format of the first DCI:
when the terminal device operates in the first communication mode, and the terminal device receives the first indication information sent by the network device;
when the terminal device operates in the second communication mode, and the terminal device receives any one or more of the third and fourth configuration information sent by the network device;
when the terminal device operates in the second communication mode, after the terminal device receives any one or more of the third and fourth configuration information sent by the network device, and before the terminal device receives new beam indication information, the beam indication information includes multi-beam information for the terminal device and the plurality of transmission nodes;
when the terminal device is indicated to communicate with the network device by using a beam or a TCI-state, but the network device configures a TCI-state selection related configuration parameter for the terminal device by using RRC signaling;
when the terminal device is indicated to communicate with the network device by using a beam or a TCI-state, but the network device indicates the terminal device to operate in the first communication mode;
when the terminal device is indicated to communicate with the network device by using a beam or a TCI-state, but the network device configures a reference signal or a channel of the terminal device to be transmitted based on one or both of two indicated TCI-states; and
when the terminal device receives any one or more of the third and fourth configuration information of the network device, and receives the first indication information and/or second indication information sent by the network device.

(d) Implementation 4: The channel is a PUSCH scheduled by using second DCI.

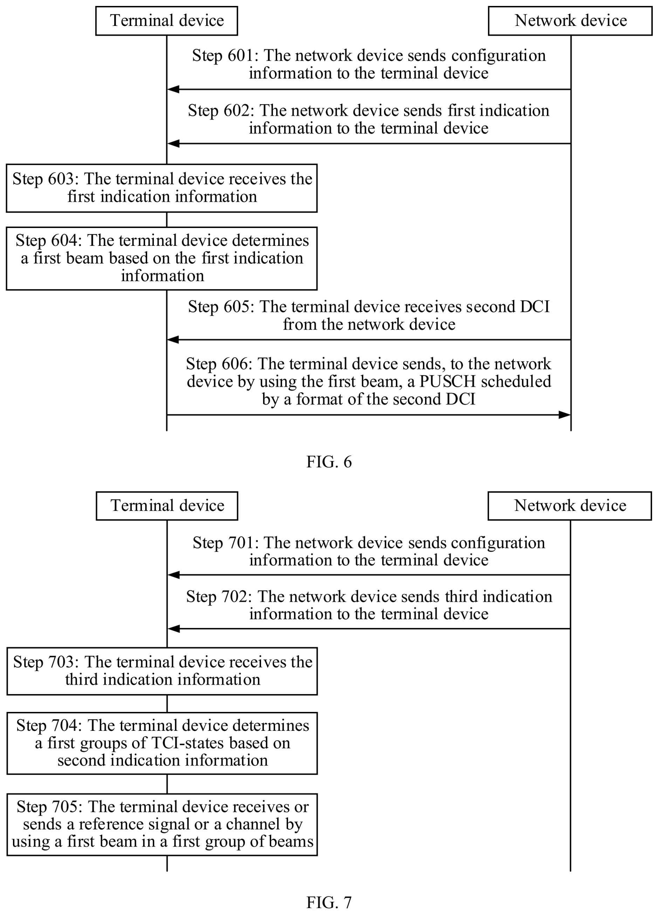

FIG. 6 is another schematic flowchart of a transmission method according to an embodiment of this application. The transmission method may be performed by the terminal device and the network device shown in FIG. 1a. As shown in FIG. 6, the transmission method includes step 601 to step 606.

Step 601: The network device sends configuration information to the terminal device.

In an optional implementation, the configuration information further includes third configuration information.

In an optional implementation, the configuration information further includes fourth configuration information.

Optionally, this implementation further includes step 602. Step 602 may be performed before step 601, or may be performed after step 601.

Step 602: The network device sends first indication information to the terminal device. Optionally, this implementation further includes step 602a. Step 602a may be performed before step 602, or may be performed after step 602.

Step 602a: The network device sends third indication information to the terminal device.

Optionally, this implementation further includes step 603.

Step 603: The terminal device receives the first indication information.

Optionally, this implementation further includes step 604.

Step 604: The terminal device determines a first beam based on the first indication information.

Optionally, this implementation further includes step 604a. Step 604a may be performed before step 604, or may be performed after step 604.

Step 604a: The terminal device determines, based on the third indication information, to switch from a first communication mode to a second communication mode.

It can be understood that for specific descriptions of step 601 to step 604, refer to step 201 to step 204 shown in FIG. 2. Details are not described herein again.

Step 605: The terminal device receives the second DCI from the network device.

In this embodiment, after determining the first beam based on the first indication information, the terminal device receives the second DCI from the network device, where the second DCI is used for scheduling the PUSCH.

Optionally, the terminal device sends, by using the first beam, the PUSCH scheduled by the format of the second DCI.

After determining the first beam based on the first indication information, the terminal device sends, based on the first beam indicated in the first indication information, the PUSCH scheduled by the format of the second DCI.

In an optional implementation, a type of the PUSCH is a PUSCH scheduled by second DCI 0_0.

In this implementation, when the terminal device operates in the first communication mode, it is usually considered by default that the first TCI-state is used for the PUSCH scheduled by DCI 0_0. When any one or more of the foregoing conditions 1 to 7 are satisfied, the first beam in the first indication information may be used for sending. Optionally, when the second TCI-state is activated by using the first indication information sent by the network device, in a communication protocol between the network device and the terminal device, the terminal device may be restricted to not expect the PUSCH scheduled by DCI 0_0.

In another optional implementation, the second DCI includes a second field, and the second field indicates that the terminal device is in the second communication mode, or the second field indicates that the terminal device sends the PUSCH by using the first beam.

When the terminal device operates in the first communication mode, this implementation is generally corresponding to a PUSCH scheduled by second DCI 0_1/0_2, and a TCI-state used for the currently scheduled PUSCH is generally indicated by the second field in the second DCI. After receiving the first indication information sent by the network device, the terminal device may perform a corresponding operation by using information indicated by the second field.

Optionally, the second field is an SRS resource set indicator.

The network device indicates, based on the SRS resource set indicator, that the currently scheduled PUSCH is sent by using a first or second TCI-state, or both TCI-states. When any one or more of the foregoing conditions 1 to 7 are satisfied, the terminal device may process the SRS resource set indicator field by using the following several methods:

The network device may set the SRS resource set indicator field to a specific value, that is, add a field to indicate that the terminal device is in the second communication mode, or to indicate that the terminal device has switched from the first communication mode to the second communication mode.

Alternatively, in the communication protocol between the terminal device and the communication device, the field may be restricted to be "00" or "01", and needs to remain corresponding to the first TCI-state or the second TCI-state that is activated by using the first indication information.

Alternatively, after the terminal device switches to the second communication mode based on the first indication information, the terminal device is restricted to not parse the field, or it is considered that the field is meaningless.

It can be understood that a rule of a first field may be set by the terminal device depending on an actual requirement. This is not limited herein.

In another optional implementation, a type of the PUSCH is a Type 1 CG-PUSCH.

In this implementation, when the terminal device operates in the first communication mode, the network device generally indicates, through RRC configuration, whether the Type 1 CG-PUSCH is sent by using the indicated first or second joint/UL TCI-state, or the indicated two joins/UL TCI-states. When any one or more of the foregoing conditions 1 to 7 are satisfied, in the communication protocol between the network device and the terminal device, the terminal device may be restricted to not send a Type 1 CG-PUSCH associated with an inactive TCI-state or associated with the two joint/UL TCI-states. Alternatively, it can be understood that the terminal device does not expect the network device to schedule a Type 1 CG-PUSCH associated with an inactive TCI-state or associated with the two joint/UL TCI-states.

Step 606: The terminal device sends, to the network device by using the first beam, the PUSCH scheduled by the format of the second DCI.

In this embodiment, the terminal device sends, to the network device by using the first beam, the PUSCH scheduled by the format of the second DCI. Assuming that the first beam is corresponding to the first TCI-state, in the communication protocol between the network device and the terminal device, the terminal device may be restricted to not expect to send, by using the second or another TCI-state, the PUSCH scheduled by the format of the second DCI.

Optionally, when one or more of the following scenarios or conditions are satisfied, the terminal device may send, to the network device by using the first beam, the PUSCH scheduled by the format of the second DCI:
when the terminal device operates in the first communication mode, and the terminal device receives the first indication information sent by the network device;
when the terminal device operates in the second communication mode, and the terminal device receives any one or more of the third and fourth configuration information sent by the network device;
when the terminal device operates in the second communication mode, after the terminal device receives any one or more of the third and fourth configuration information sent by the network device, and before the terminal device receives new beam indication information, the beam indication information includes multi-beam information for the terminal device and a plurality of transmission nodes;
when the terminal device is indicated to communicate with the network device by using a beam or a TCI-state, but the network device configures a TCI-state selection related configuration parameter for the terminal device by using RRC signaling;
when the terminal device is indicated to communicate with the network device by using a beam or a TCI-state, but the network device indicates the terminal device to operate in the first communication mode;
when the terminal device is indicated to communicate with the network device by using a beam or a TCI-state, but the network device configures a reference signal or a channel of the terminal device to be transmitted based on one or both of two indicated TCI-states; and
when the terminal device receives any one or more of the third and fourth configuration information of the network device, and receives the first indication information and/or second indication information sent by the network device.

FIG. 7 is another schematic flowchart of a transmission method according to an embodiment of this application. The transmission method may be performed by the terminal device and the network device shown in FIG. 1a. As shown in FIG. 7, the transmission method includes step 701 to step 705.

Step 701: The network device sends configuration information to the terminal device.

In this embodiment, for specific content of the configuration information, refer to the specific descriptions in step 201 shown in FIG. 2. Details are not described herein again.

In an optional implementation, the configuration information includes sixth configuration information.

The sixth configuration information is used to configure a configuration that is related to a channel/reference signal and that is used when the terminal device operates in a second communication mode. The channel may be one or more of a PDSCH, a PDCCH, a PUCCH, or a PUSCH. The reference signal is one or more of a synchronization signal and physical broadcast channel block (Synchronization Signal and PBCH Block, SSB), a CSI-RS, or an SRS.

Optionally, the sixth configuration information further indicates the terminal device to operate in the second communication mode, that is, indicates the terminal device to communicate with the network device through a single transmission node.

In another optional implementation, the configuration information may further include seventh configuration information.

When the terminal device operates in a first communication mode, the seventh configuration information indicates the terminal device to switch from the first communication mode to the second communication mode.

Optionally, the seventh configuration information is further used to configure a channel/resource configuration and a reporting configuration that are used when the terminal device operates in the second communication mode.

Optionally, the seventh configuration information may be further used to release a TCI selection configuration parameter, that is, does not need to indicate whether a first or second joint/DL/UL TCI-state is used when the terminal device operates with different reference signals or channels.

Optionally, the first communication mode is an mTRP mode, and the second communication mode is an sTRP mode.

Optionally, this embodiment further includes step 702. Step 702 may be performed before step 701, or may be performed after step 701.

Step 702: The network device sends third indication information to the terminal device.

In this embodiment, the third indication information may indicate beam information for communication with a plurality of transmission nodes, and the beam information indicates the terminal device to communicate with the network device through the plurality of transmission nodes by using an indicated beam.

In an optional implementation, the third indication information is carried in third MAC CE signaling.

In this implementation, the third MAC CE signaling is used to activate one or more groups of TCI-states corresponding to the plurality of transmission nodes.

Optionally, when the terminal device operates in the second communication mode, the third MAC CE signaling is used to activate one or more groups of TCI-states. The one or more groups of TCI-states activated by using the third MAC CE signaling include TCI-states associated with the plurality of transmission nodes, and implicitly indicate the terminal device to switch to the first communication mode.

Optionally, when the terminal device operates in the second communication mode, the third MAC CE signaling may include a field, and the field explicitly indicates the terminal device to switch from the second communication mode to the first communication mode.

Optionally, when the terminal device operates in the first communication mode, the one or more groups of TCI-states associated with the plurality of transmission nodes are activated by using the third MAC CE signaling.

In another optional implementation, the third indication information is carried in third MAC CE signaling and fifth DCI signaling.

In this implementation, if a plurality of groups of TCI-states are activated by using the third MAC CE signaling, the network device needs to further deliver a fourth DCI indication to indicate which group of TCI-states in the plurality of groups of TCI-states is used by the terminal device to communicate with each of the plurality of transmission nodes. In this case, the third indication information is carried in third MAC CE signaling and the fifth DCI signaling. The fifth DCI signaling indicates the terminal device to communicate with each of the plurality of transmission nodes by using a first group of TCI-states, and the first group of TCI-states belongs to one group of the plurality of groups of TCI-states activated by using the third MAC CE signaling.

That only one group of TCI-states is activated by using the third MAC CE signaling can be understood as follows: The group of TCI-states is corresponding to one code point. The code point is corresponding to a plurality of joint TCI-states corresponding to the plurality of transmission nodes, or is corresponding to a plurality of DL TCI-states and a plurality of UL TCI-states corresponding to the plurality of transmission nodes.

That the plurality of groups of TCI-states are activated by using the third MAC CE signaling can be understood as follows: The plurality of groups of TCI-states are corresponding to a plurality of code point. Optionally, at least one code point is corresponding to a plurality of joint TCI-states corresponding to the plurality of transmission nodes, or is corresponding to a plurality of joint/DL TCI-states and a plurality of UL TCI-states corresponding to the plurality of transmission nodes. Optionally, TCI-states corresponding to the plurality of code points include TCI-states corresponding to at least two transmission nodes. For example, a first code point is corresponding to one joint TCI-state, or one joint/DL TCI-state and one UL TCI-state corresponding to a first transmission node, and a second code point is corresponding to one joint TCI-state, or one joint/DL TCI-state and one UL TCI-state corresponding to a second transmission node.

Optionally, when the terminal device operates in the second communication mode, the fifth DCI signaling may include a field, and the field explicitly indicates the terminal device to switch from the second communication mode to the first communication mode.

It can be understood that the third MAC CE signaling may be redefined MAC CE signaling. Alternatively, existing MAC CE signaling may be used to activate the TCI-states by changing some information or rules in the MAC CE signaling. A specific form is not limited.

It can be understood that the fifth DCI signaling may be redefined DCI signaling. Alternatively, existing DCI beam indication signaling may be used.

Optionally, this implementation further includes step 702a. Step 702a may be performed before step 702, or may be performed after step 702.

Step 702a: The network device sends third indication information to the terminal device.

In a possible implementation, the third indication information is carried in third MAC CE signaling or sixth DCI signaling.

When the terminal device operates in the second communication mode, the third MAC CE signaling or the sixth DCI signaling may include a field, and the field explicitly indicates the terminal device to switch from the second communication mode to the first communication mode.

It can be understood that the third MAC CE signaling or the sixth DCI signaling may be redefined MAC CE or DCI signaling. Alternatively, existing MAC CE or DCI signaling may explicitly indicate, by changing some information or rules in the existing MAC CE or DCI signaling, the terminal device to switch from the second communication mode to the first communication mode.

Optionally, this implementation further includes step 703.

Step 703: The terminal device receives the third indication information.

In this embodiment, the terminal device receives the third indication information delivered by the network device, and determines, based on content in the third indication information, specified TCI-states for communicating with the network device. The third indication information indicates the terminal device to communicate with the network device by using the specified TCI-states.

It can be understood that after receiving the third indication information delivered by the network device, the terminal device feeds back acknowledgment information to the network device, so that based on the acknowledgment information, the network device confirms that the terminal device receives the third indication information, and confirms that the network device and the terminal device communicate with each other by using the specified TCI-states.

In an optional implementation, when the terminal device operates in the second communication mode, after receiving the third indication information, the terminal device may determine, based on the third indication information, to switch from the second communication mode to the first communication mode.

In this optional implementation, optionally, an effective condition for the terminal device to switch from the second communication mode to the first communication mode is:
after a first time period in which the terminal device receives the third indication information and feeds back the acknowledgment information to the network device.

It can be understood that after receiving the third indication information, the terminal device switches from the second communication mode to the first communication mode, and needs to notify the network device that mode switching has been completed. Therefore, after receiving the third indication information, the terminal device feeds back the acknowledgment information to the network device. After receiving the acknowledgment message fed back by the terminal device, the network device confirms that the terminal device has switched to the first communication mode, and communicates with the terminal device according to a rule corresponding to the first communication mode.

If only one group of TCI-states is activated by using the third MAC CE signaling, the network device does not need to deliver a fourth DCI indication to further indicate which group of TCI-states in the plurality of groups of TCI-states is used by the terminal device to communicate with each of the plurality of transmission nodes. In this case, optionally, the effective condition for the terminal device to switch from the second communication mode to the first communication mode is: after the first time period in which the terminal device receives the third MAC CE signaling and feeds back an acknowledgment message.

If the plurality of groups of TCI-states are activated by using the third MAC CE signaling, the network device needs to further deliver the fourth DCI indication to indicate which group of TCI-states in the plurality of groups of TCI-states is used by the terminal device to communicate with each of the plurality of transmission nodes. In this case, optionally, the third indication information includes the third MAC CE signaling and the fourth DCI, and the fourth DCI indicates which group of TCI-states in the plurality of groups of TCI-states is used by the terminal device to communicate with each of the plurality of transmission nodes. In this case, optionally, an effective condition for the terminal device to switch from the first communication mode to the second communication mode is: after a second time period in which the terminal device receives the fourth DCI and feeds back an acknowledgment message.

In another optional implementation, when the terminal device operates in the first communication mode, the terminal device determines, based on the third indication information, beam information for communication with each of the plurality of transmission nodes.

Optionally, this implementation further includes step 703a. Step 703a may be performed before step 703, or may be performed after step 703.

Step 703a: The terminal device receives the third indication information.

When the terminal device operates in the second communication mode, after receiving the third indication information, the terminal device may switch from the second communication mode to the first communication mode based on the third indication information.

Optionally, this implementation further includes step 704.

Step 704: The terminal device determines the first group of TCI-states based on the third indication information.

In this embodiment, the third indication information indicates the terminal device to communicate with the network device through the plurality of transmission nodes by using the specified TCI-states. After receiving the third indication information, the terminal device may determine, based on the third indication information, to communicate with the network device by using a specified first group of beams.

In an optional implementation, when the terminal device operates in the second communication mode, if the third indication information is carried in the third MAC CE signaling and/or the fifth DCI signaling, that the terminal device receives the third indication information includes one or more of the following:
the terminal device determines, based on the third MAC CE signaling, activated TCI-states for communication with the plurality of transmission nodes;
the terminal device determines, based on the third MAC CE signaling and/or the fifth DCI signaling, to switch from the second communication mode to the first communication mode; and
the terminal device determines the first group of beams based on the fifth DCI signaling.

In this implementation, if only one group of TCI-states is activated by using the third MAC CE signaling, the network device does not need to deliver the fourth DCI indication to further indicate which group of TCI-states in the plurality of groups of TCI-states is used by the terminal device to communicate with each of the plurality of transmission nodes.

In this implementation, if the plurality of groups of TCI-states are activated by using the third MAC CE signaling, the network device needs to further deliver the fifth DCI signaling indication to indicate which group of TCI-states in the plurality of groups of TCI-states is used by the terminal device to communicate with each of the plurality of transmission nodes. In this case, the third indication information includes the third MAC CE signaling and the fifth DCI signaling.

Optionally, in this implementation, the third indication information may indicate the terminal device to switch from the second communication mode to the first communication mode. Optionally, the third indication information is carried in the third MAC CE signaling and/or the fifth DCI signaling, one or more groups of TCI-states are activated by using the third MAC CE signaling, and the one or more groups of TCI-states activated by using the third MAC CE signaling include the TCI-states associated with the plurality of transmission nodes. Then, the terminal device can learn that second MAC CE implicitly indicates the terminal device to switch to the first communication mode. Optionally, the third indication information is carried in the third MAC CE signaling and/or the fifth DCI signaling, the third MAC CE signaling and/or the fifth DCI signaling include/includes a field, and the field explicitly indicates the terminal device to switch from the second communication mode to the first communication mode. Then, the terminal device learns that the third indication information explicitly indicates the terminal device to switch to the first communication mode.

In another optional implementation, when the terminal device operates in the first communication mode, if the third indication information is carried in the third MAC CE signaling and/or the fifth DCI signaling, that the terminal device receives the third indication information includes one or more of the following:
the terminal device determines, based on the third MAC CE signaling, activated TCI-states for communication with the plurality of transmission nodes; and
the terminal device determines the first group of beams based on the fifth DCI signaling.

In this implementation, if only one group of TCI-states is activated by using the third MAC CE signaling, the network device does not need to deliver the fourth DCI indication to further indicate which group of TCI-states in the plurality of groups of TCI-states is used by the terminal device to communicate with each of the plurality of transmission nodes.

In this implementation, if the plurality of groups of TCI-states are activated by using the third MAC CE signaling, the network device needs to further deliver the fifth DCI signaling indication to indicate which group of TCI-states in the plurality of groups of TCI-states is used by the terminal device to communicate with each of the plurality of transmission nodes. In this case, the third indication information includes the third MAC CE signaling and the fifth DCI signaling.

Optionally, this implementation further includes step 704a. Step 704a may be performed before step 704, or may be performed after step 704.

Step 704a: The terminal device determines, based on the third indication information, to switch from the second communication mode to the first communication mode.

When the terminal device operates in the second communication mode, after receiving the third indication information, the terminal device may determine, based on the third indication information, to switch from the second communication mode to the first communication mode.

In this optional implementation, optionally, the effective condition for the terminal device to switch from the second communication mode to the first communication mode is:
after the first time period in which the terminal device receives the third indication information and feeds back the acknowledgment information to the network device.

Optionally, this implementation further includes step 705.

Step 705: The terminal device receives or sends a reference signal or a channel by using a first beam in the first group of beams.

It can be understood that in an example scenario, when the terminal device operates in the second communication mode, the terminal device communicates with one transmission node by using a single beam. When the terminal device receives the third indication information, the third indication information indicates the first group of beams (that is, a plurality of pieces of beam information). The plurality of pieces of beam information are used by the terminal device to communicate with the plurality of transmission nodes, and may implicitly indicate the terminal device to switch from the second communication mode to the first communication mode. In this case, RRC reconfiguration has not been performed, only a resource of the single transmission node is configured for the terminal device, and the terminal device can communicate with the single transmission node only by using the single beam. However, the first group of beams is indicated to the terminal device. Therefore, the terminal device may receive or send the reference signal or the channel according to a protocol specification or a configuration of the network device by using the first beam in the first group of beams.

In another example scenario, when the terminal device operates in the first communication mode, the terminal device communicates with the plurality of transmission nodes by using a plurality of beams. When the terminal device receives the seventh configuration information, the seventh configuration information indicates the terminal device to switch from the first communication mode to the second communication mode, and configure a configuration that is related to a channel/resource and that is used when the terminal device operates in the second communication mode. In this case, the terminal device communicates with the plurality of transmission nodes by using one group of beams, but only a resource of the single transmission node is configured for the terminal device. Therefore, the terminal device may receive or send the reference signal or the channel according to a protocol specification or a configuration of the network device by using the first beam in the first group of beams.

That the terminal device receives or sends the reference signal or the channel by using the first beam in the first group of beams may take effect in one or more of the following scenarios or conditions:
when the terminal device operates in the first communication mode, and the terminal device receives the seventh configuration information sent by the network device;
when the terminal device operates in the first communication mode, after the terminal device receives the seventh configuration information sent by the network device, and before the terminal device receives new beam indication information, the beam indication information includes beam information for communication between the terminal device and the single transmission node;
when the terminal device operates in the second communication mode, and the terminal device receives the third indication information sent by the network device;
when the terminal device operates in the second communication mode, and the terminal device receives the third indication information and the third indication information that are sent by the network device;
when the terminal device is indicated to communicate with the network device by using two beams or TCI-states, but the network device releases a TCI-state selection field for the terminal device by using RRC signaling;
when the terminal device is indicated to communicate with the network device by using two beams or TCI-states, but the network device indicates the terminal device to operate in the second communication mode;
when the terminal device is indicated to communicate with the network device by using two beams or TCI-states, but the network device configures a reference signal or a channel of the single transmission node of the terminal device;
when the terminal device receives the sixth configuration information sent by the network device, and receives the third indication information sent by the network device;
when the terminal device receives the sixth configuration information sent by the network device, and receives the third indication information and the third indication information that are sent by the network device; and
when the terminal device receives the third indication information sent by the network device, and the terminal device receives the seventh configuration information sent by the network device.

The first beam in the first group of beams may be determined, by using a default rule, as a first beam that is in the first group of beams and that is associated with the first transmission node, or may be any remaining beam in the first group of beams. The first beam in the first group of beams may be corresponding to one joint/DL TCI-state that is used for uplink and downlink transmission; or may be corresponding to one joint/DL TCI-state and one UL TCI-state that are used for downlink transmission and uplink transmission, respectively.

It can be understood that, for ease of description, implementations of different reference signals or channels are separately described. In an actual application process, the transmission methods shown in FIG. 2 to FIG. 7 may be implemented separately, or may be implemented in combination. The terminal device may perform combined implementation in different manners based on specific types of reference signals and channels. It can be understood that, for combined implementation, the steps from delivering, by the network device, the configuration information to determining, by the terminal device, the first beam based on the first indication information are common steps. Corresponding implementation content may be added based on different reference signals or channels, and does not need to be repeatedly performed during combined implementation.

In addition, at present, multi-TA (Timing advance) enhancement is introduced for an mDCI mTRP scenario in R18, that is, two TAs are maintained for one serving cell. For an intra-cell mTRP scenario and an inter-cell mTRP scenario, there are a plurality of beam pair links (beam pair links, BPLs) between the terminal device and the network device. When a propagation path difference between the links is large, the terminal device and the network device maintain two TAs to ensure timing synchronization for uplink transmission at each transmission node (TRP), where each TA is associated with one TAG. In R18, a TA/TAG is associated with a TCI-state. When sending an uplink signal, the terminal device may determine a TA value for uplink sending based on a specific TA/TAG with which a TCI-state for uplink sending is associated.

Based on this, after the terminal device is indicated, based on the first indication information, to communicate with the network device based on a single beam or TCI-state, how the terminal device falls back from maintaining a plurality of TAs to maintaining a single TA also needs to be urgently resolved.

For ease of description, an example in which one network device is corresponding to one transmission node is used for description.

Because one serving cell for the terminal device is still associated with two TAGs, to reduce a waste of resources, the terminal device may stop, based on the first indication information, maintaining a TA/TAG associated with an inactive TCI-state.

In correspondence to embodiments provided in FIG. 2 to FIG. 7, in an optional implementation, the configuration information further includes eighth configuration information.

In this implementation, the eighth configuration information is used by the network device to indicate a TA associated with the terminal device. The eighth configuration information includes an association relationship between a TCI-state and a TAG/TA, TAG information (a quantity of TAGs, a TAG ID, and the like) of a serving cell, and TA information (a timing advance offset (Timing Advance Offset), duration of a timer, and the like).

In an optional implementation, a plurality of network devices include the first transmission node and the second transmission node, the first transmission node is associated with a first timing advance TA, the first indication information is used to activate one or more beams associated with the first transmission node, and the one or more beams associated with the first transmission node are all associated with the first TA.

In this optional implementation, after the transmission node delivers the eighth configuration information to the terminal device, the terminal device may configure TA-related information based on the eighth configuration information. After receiving the first indication information, the terminal device is indicated to communicate with the first transmission node by using only a specified beam or TCI-state. In this case, the terminal device communicates with the first transmission node by using only the one or more beams associated with the first transmission node.

In an optional implementation, if the second transmission node is associated with a second TA, the terminal device stops a timer corresponding to the second TA; the terminal device stops a random access channel (random access channel, RACH) procedure corresponding to the second TA; the terminal device clears sending of an uplink physical channel or an uplink reference signal corresponding to the second TA; and the terminal device clears a HARQ buffer corresponding to the second TA.

In this implementation, after receiving the first indication information, the terminal device switches from the first communication mode to the second communication mode, and communicates with the first transmission node by using the first beam. Because one serving cell for the terminal device is still associated with two TAGs, to reduce a waste of resources, the foregoing content may be specified in a communication protocol between the terminal device and the first transmission node, so that the terminal device stops maintaining the TA/TAG associated with the inactive TCI-state.

In an optional implementation, the plurality of transmission nodes include the first transmission node and the second transmission node, the first transmission node is associated with the first timing advance TA, the first indication information is used to activate the one or more beams associated with the first transmission node, and the one or more beams associated with the first transmission node are all associated with the first TA.

For ease of description, in this optional implementation, it is assumed that the plurality of transmission nodes include the first transmission node and the second transmission node. After the transmission node delivers the eighth configuration information to the terminal device, the terminal device may configure the TA-related information based on the eighth configuration information. After receiving the first indication information, the terminal device is indicated to communicate with the first transmission node by using only the specified beam or TCI-state. In this case, the terminal device communicates with the first transmission node by using only the one or more beams associated with the first transmission node.

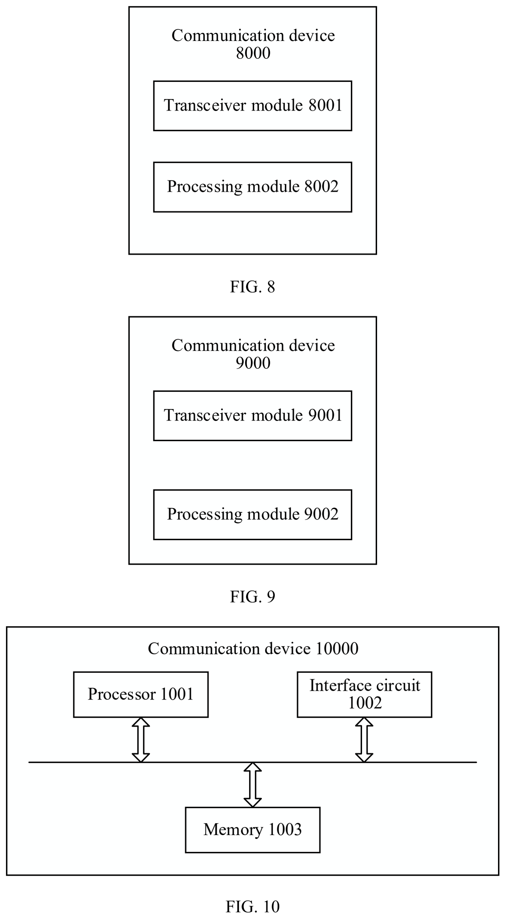

Based on the embodiments corresponding to FIG. 1a to FIG. 7, for better implementation of the foregoing solutions in embodiments of this application, the following further provides related devices configured to implement the foregoing solutions. FIG. 8 is a diagram of a structure of a communication device according to an embodiment of this application.

The communication device 8000 may be one of the terminal devices 120a to 120j shown in FIG. 1a, or may be a component (for example, a processor, a chip, or a chip system) of the terminal device. The communication device 8000 includes:
a transceiver module 8001, configured to receive first indication information, where the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam; and
a processing module 8002, configured to determine a first beam based on the first indication information; where
the processing module 8002 is further configured to measure or transmit a reference signal based on the first beam, or transmit a channel based on the first beam.

In a possible implementation, the reference signal includes a channel state information-reference signal CSI-RS, the plurality of beams are respectively associated with a plurality of CSI-RS sets, and each CSI-RS set includes a plurality of CSI-RSs.

Before receiving the first indication information, the terminal device receives first configuration information, where the first configuration information indicates the terminal device to report a second measurement result of K groups of CSI-RSs, K is greater than or equal to 0, a second measurement result of each group of CSI-RSs includes at least two CSI-RSs, and the at least two CSI-RSs are from different CSI-RS sets;
after the terminal device receives the first indication information and determines the first beam based on the first indication information, the processing module 8002 is further configured to: determine, for the terminal device from the plurality of CSI-RS sets, a first CSI-RS set associated with the first beam, and measure, for the terminal device, only the first CSI-RS set to obtain a first measurement result; and
after the terminal device switches from the first communication mode to the second communication mode, the terminal device reports only the first measurement result, where the first measurement result includes a second measurement result of M CSI-RSs, the M CSI-RSs for the second measurement result are all from the first CSI-RS set, and M is greater than or equal to 0.

In a possible implementation, the reference signal includes a channel state information-reference signal CSI-RS, a CSI-RS set includes a plurality of CSI-RS groups and one or more CSI-RS resource pairs, each CSI-RS group includes a plurality of CSI-RSs, CSI-RSs in the plurality of CSI-RS groups are associated with the plurality of beams, and the CSI-RS resource pair includes one CSI-RS from each CSI-RS group.

Before receiving the first indication information, the terminal device receives second configuration information, where the second configuration information indicates the terminal device to report a fourth measurement result of X CSI-RSs, X is greater than or equal to 0, and/or the second configuration information indicates the terminal device to report a fifth measurement result of one CSI-RS resource pair;
after the terminal device receives the first indication information and determines the first beam based on the first indication information, the processing module 8002 is further configured to: determine, for the terminal device from the CSI-RS set, a CSI-RS associated with the first beam, and measure, for the terminal device, only the CSI-RS associated with the first beam, to obtain a third measurement result; and
after the terminal device switches from the first communication mode to the second communication mode, the terminal device reports only the third measurement result.

In a possible implementation, the reference signal includes a sounding reference signal SRS, the plurality of beams are respectively associated with a plurality of SRS sets, and the processing module 8002 is further configured to:
determine, for the terminal device from the plurality of SRS sets, an SRS set associated with the first beam; and
send, for the terminal device, only the SRS set associated with the first beam.

In a possible implementation, the channel includes a physical downlink shared channel PDSCH scheduled by a format of first downlink control information DCI, and the processing module 8002 is further configured to:
receive, for the terminal device, the first DCI, where the first DCI is used for scheduling the PDSCH; and
receive, for the terminal device by using the first beam, the PDSCH scheduled by the format of the first DCI.

In a possible implementation, the method further includes:
the first DCI includes a first field, and the first field indicates that the terminal device is in the second communication mode, or the first field indicates that the terminal device receives the PDSCH by using the first beam; and
the terminal device receives, by using the first beam, the PDSCH scheduled by the format of the first DCI.

In a possible implementation, the channel includes a physical uplink shared channel PUSCH scheduled by a format of second downlink control information DCI, and that the terminal device transmits the channel based on the first beam includes:
the terminal device receives the second DCI, where the second DCI is used for scheduling the PUSCH; and
the terminal device sends, by using the first beam, the PUSCH scheduled by the format of the second DCI.

In a possible implementation, the method further includes:
the second DCI includes a second field, and the second field indicates that the terminal device is in the second communication mode, or the second field indicates that the terminal device sends the PUSCH by using the first beam; and
the terminal device sends, by using the first beam, the PUSCH scheduled by the format of the second DCI.

In a possible implementation, the first indication information includes a medium access control control element MAC CE.

In a possible implementation, the first indication information further includes third downlink control information DCI, the third DCI indicates the terminal device to communicate with the single transmission node by using the first beam, and that the terminal device determines the first beam based on the first indication information includes:
the terminal device switches from the first communication mode to the second communication mode based on the MAC CE; and
the terminal device determines the first beam based on the third DCI.

In a possible implementation, the plurality of transmission nodes include a first transmission node and a second transmission node, the first transmission node is associated with a first timing advance TA, the first indication information is used to activate one or more beams associated with the first transmission node, and the one or more beams associated with the first transmission node are all associated with the first TA.

In a possible implementation, the second transmission node is associated with a second TA, and the method further includes:
the terminal device stops a timer corresponding to the second TA;
the terminal device stops a random access channel RACH procedure corresponding to the second TA;
the terminal device clears sending of an uplink physical channel or an uplink reference signal corresponding to the second TA; and
the terminal device clears a hybrid automatic repeat request HARQ buffer corresponding to the second TA.

In a possible implementation, an effective condition for the terminal device to switch from the first communication mode to the second communication mode is:
after a first time period in which the terminal device receives the first indication information and feeds back acknowledgment information to the transmission node.

In a possible implementation, the first communication mode is a multiple transmission and reception point mTRP mode, and the second communication mode is a single transmission and reception point sTRP mode.

In this embodiment, operations performed by the units in the communication device 8000 are similar to those described in the method embodiments shown in FIG. 2 to FIG. 7, may be used to implement functions of a computing device in the foregoing method embodiments, and can also achieve beneficial effects of the foregoing method embodiments. Details are not described herein again.

FIG. 9 is a diagram of another structure of a communication device according to an embodiment of this application.

The communication device 9000 may be the network device 110a or 110b shown in FIG. 1a, or may be a component (for example, a processor, a chip, or a chip system) of the network device. The communication device 9000 includes:
a transceiver module 9001, configured to send first indication information to a terminal device, where the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam; and
a processing module 9002, configured to receive a measurement result of a reference signal from the terminal device, or transmit a reference signal or a channel.

In a possible implementation, the reference signal includes a channel state information-reference signal CSI-RS, the plurality of beams are respectively associated with a plurality of CSI-RS sets, each CSI-RS set includes a plurality of CSI-RSs, and before the sending the first indication information to the terminal device, the method further includes:
sending first configuration information to the terminal device, where the first configuration information indicates the terminal device to report a second measurement result of K groups of CSI-RSs, K is greater than or equal to 0, a second measurement result of each group of CSI-RSs includes at least two CSI-RSs, and the at least two CSI-RSs are from different CSI-RS sets; and
after the first indication information is sent to the terminal device, the processing module 9002 is further configured to:
   receive a first measurement result from the terminal device, where the first measurement result includes a second measurement result of M CSI-RSs, the M CSI-RSs for the second measurement result are all from a first CSI-RS set, and M is greater than or equal to 0.

In a possible implementation, the reference signal includes a channel state information-reference signal CSI-RS, a CSI-RS set includes a plurality of CSI-RS groups and one or more CSI-RS resource pairs, each CSI-RS group includes a plurality of CSI-RSs, CSI-RSs in the plurality of CSI-RS groups are associated with the plurality of beams, the CSI-RS resource pair includes one CSI-RS from each CSI-RS group, and before the sending the first indication information to the terminal device, the method further includes:
sending second configuration information to the terminal device, where the second configuration information indicates the terminal device to report a fourth measurement result of X CSI-RSs, X is greater than or equal to 0, and/or the second configuration information indicates the terminal device to report a fifth measurement result of one CSI-RS resource pair; and
after the first indication information is sent to the terminal device, the processing module 9002 is further configured to:
   receive a third measurement result from the terminal device, where the third measurement result is a result of measuring, by the terminal device, only a CSI-RS associated with a first beam.

In a possible implementation, the reference signal includes a sounding reference signal SRS, the plurality of beams are respectively associated with a plurality of SRS sets, and the processing module 9002 is further configured to:
receive an SRS set associated with the first beam.

In a possible implementation, the channel includes a physical downlink shared channel PDSCH scheduled by a format of first downlink control information DCI, and the processing module 9002 is further configured to:
send the first DCI to the terminal device, where the first DCI is used for scheduling the PDSCH; and
send the PDSCH scheduled by the format of the first DCI to the terminal device.

In a possible implementation, the method further includes:
the first DCI includes a first field, and the first field indicates that the terminal device is in the second communication mode, or the first field indicates that the terminal device receives the PDSCH by using the first beam; and
sending the PDSCH scheduled by the format of the first DCI to the terminal device.

In a possible implementation, the channel includes a physical uplink shared channel PUSCH scheduled by a format of second downlink control information DCI, and the transmitting the channel includes:
sending the second DCI to the terminal device, where the second DCI is used for scheduling the PUSCH; and
receiving the PUSCH scheduled by the format of the second DCI.

In a possible implementation, the method further includes:
the second DCI includes a second field, and the second field indicates that the terminal device is in the second communication mode, or the second field indicates that the terminal device sends the PUSCH by using the first beam; and
receiving the PUSCH scheduled by the format of the second DCI.

In a possible implementation, the first indication information includes a medium access control control element MAC CE.

In a possible implementation, the first indication information further includes third downlink control information DCI, and the third DCI indicates the terminal device to communicate with the single transmission node by using the first beam.

In a possible implementation, a plurality of network devices include a first network device, the first network device is associated with a first timing advance TA, the first indication information is used to activate one or more beams associated with the first network device, and the one or more beams associated with the first network device are all associated with the first TA.

In a possible implementation, an effective condition of the first indication information is: after a first time period in which determining information is received.

In a possible implementation, the first communication mode is a multiple transmission and reception point mTRP mode, and the second communication mode is a single transmission and reception point sTRP mode.

In this embodiment, operations performed by the units in the communication device 9000 are similar to those described in the method embodiments shown in FIG. 2 to FIG. 7, may be used to implement functions of a computing device in the foregoing method embodiments, and can also achieve beneficial effects of the foregoing method embodiments. Details are not described herein again.

FIG. 10 is a diagram of another structure of a communication device according to an embodiment of this application. The communication device 10000 may be a network device or a terminal device, or may be a chip, a chip system, a processor, or the like that supports the terminal device or the network device in implementing the foregoing methods. The apparatus may be configured to implement the methods described in FIG. 2 to FIG. 7 in embodiments of this application. For details, refer to the descriptions in the foregoing method embodiments.

The communication device 10000 includes one or more processors 1001 and an interface circuit 1002. The processor 1001 is coupled to the interface circuit 1002. It can be understood that the interface circuit 1002 may be a transceiver or an input/output interface.

Optionally, the communication device 10000 may include one or more memories 1003, configured to: store instructions executed by the processor 1001, store input data needed by the processor 1001 to run instructions, or store data generated after the processor 1001 runs instructions.

In another optional design, the processor 1001 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read/write code/data, or the transceiver circuit, the interface, or the interface circuit may be configured to transmit or transfer a signal.

In another possible design, the communication device 10000 may include a circuit, and the circuit may implement the sending, receiving, or communication function in the foregoing method embodiments.

When the communication device 10000 is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication device 10000 is a module used in a network device, the network device module in the network device implements functions of the network device in the foregoing method embodiments. The network device module receives information from another module (for example, a radio frequency module or an antenna) in the network device, where the information is sent by a terminal device to the network device. Alternatively, the network device module sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It can be understood that the processor 1001 in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that can be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium known in the conventional technology. For example, the storage medium is coupled to the processor, so that the processor can read information from the storage medium and write information into the storage medium. The storage medium may be alternatively a component of the processor. The processor and the storage medium may be located in an ASIC. In addition, the ASIC may be located in a network device or a terminal device. Alternatively, the processor and the storage medium may exist in a network device or a terminal device as discrete assemblies.

The apparatus described in the foregoing embodiment may be a network device or a terminal device. However, the scope of the apparatus described in this application is not limited thereto, and a structure of the apparatus may not be limited to that in FIG. 10. The apparatus may be an independent device, or may be a part of a large device. For example, the apparatus may be:
(1) an independent integrated circuit (integrated circuit, IC), a chip, or a chip system or subsystem;
(2) a set including one or more ICs, where optionally, the IC set may further include a storage component configured to store data and/or instructions;
(3) an ASIC, for example, a modem (MSM);
(4) a module that can be embedded in another device;
(5) a receiver, a terminal device, an intelligent terminal device, a cellular phone, a wireless device, a handheld device, a mobile unit, a vehicle-mounted device, a network device, a cloud device, an artificial intelligence device, a machine device, a household device, a medical device, an industrial device, or the like; or
(6) others.

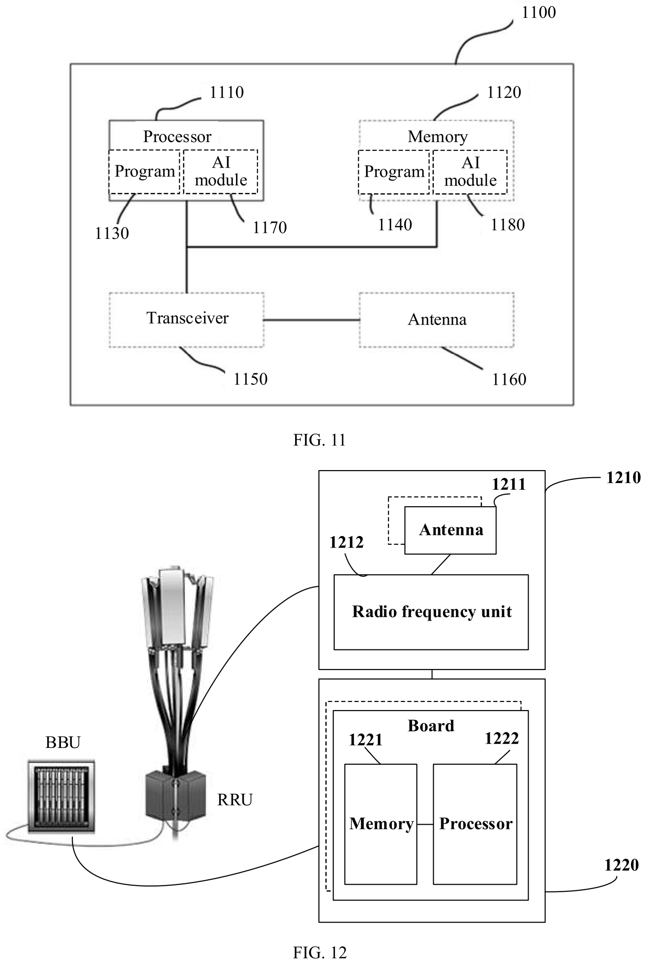

FIG. 11 is a diagram of another structure of a communication device according to an embodiment of this application. The communication device 1100 may be a network device or a terminal device, or may be a chip, a chip system, a processor, or the like that supports the terminal device or the network device in implementing the foregoing methods. The apparatus may be configured to implement the methods described in FIG. 2 to FIG. 7 in embodiments of this application. For details, refer to the descriptions in the foregoing method embodiments.

As shown in FIG. 11, it can be understood that the communication device 1100 includes means in necessary forms, such as modules, units, elements, circuits, or interfaces, to be properly configured together to perform the solutions. The communication device 1100 may be a RAN node, a terminal device, a core network device, or another network device in FIG. 1a, or may be a component (for example, a chip) of these devices, and is configured to implement the method described in the foregoing method embodiments. The communication device 1100 includes one or more processors 1110. The processor 1110 may be a general-purpose processor, a dedicated processor, or the like. For example, the processor 1110 may be a baseband processor or a central processing unit. The baseband processor may be configured to process a communication protocol and communication data. The central processing unit may be configured to control the communication device (for example, an access network (radio access network, RAN) node, a terminal device, or a chip), execute a software program, and process data of the software program.

Optionally, in a design, the processor 1110 may include a program 1130 (which may also be referred to as code or instructions sometimes). The program 1130 may be run on the processor 1110, so that the communication device 1100 performs the methods described in the following embodiments. In another possible design, the communication device 1100 includes a circuit (not shown in FIG. 11), and the circuit is configured to implement the functions described in FIG. 2 to FIG. 7 in embodiments.

Optionally, the communication device 1100 may include one or more memories 1120, and the one or more memories 1120 store a program 1140 (which may also be referred to as code or instructions sometimes). The program 1140 may be run on the processor 1110, so that the communication device 1100 performs the methods described in the method embodiments described in FIG. 2 to FIG. 7.

Optionally, the processor 1110 and/or the memory 1120 may include artificial intelligence (Artificial Intelligence, AI) modules 1170 and 1180, and the AI module is configured to implement AI-related functions. The AI module may be implemented by using software, hardware, or a combination of software and hardware. For example, the AI module may include an RIC module. For example, the AI module may be a near-real-time radio access network intelligent controller (RAN intelligent controller, RIC) or a non-real-time RIC.

Optionally, the processor 1110 and/or the memory 1120 may further store data. The processor and the memory may be disposed separately, or may be integrated together.

Optionally, the communication device 1100 may further include a transceiver 1150 and/or an antenna 1160. The processor 1110 sometimes may also be referred to as a processing unit, and controls the communication device (for example, the RAN node or the terminal device). The transceiver 1150 sometimes may also be referred to as a transceiver unit, a transceiver device, a transceiver circuit, a transceiver, or the like, and is configured to implement receiving and sending functions of the communication device through the antenna 1160.

When the communication device in this embodiment of this application is a network device, the communication device may be shown in FIG. 12. FIG. 12 is a diagram of another structure of a communication device according to an embodiment of this application. The communication device may include one or more radio units such as a remote radio unit (remote radio unit, RRU) 1210, and one or more baseband units (baseband units, BBUs) (which may also be referred to as a digital unit (digital unit), DU) 1220. The RRU 1210 may be referred to as a transceiver module. The transceiver module may include a sending module and a receiving module, or the transceiver module may be a module that can implement sending and receiving functions. The transceiver module may be corresponding to the transceiver module 9001 in FIG. 9, that is, the transceiver module may perform an action performed by the transceiver module 1001. Optionally, the transceiver module may also be referred to as a transceiver device, a transceiver circuit, a transceiver, or the like, and may include at least one antenna 1211 and a radio frequency unit 1212. The RRU 1210 is mainly configured to: receive and send radio frequency signals, and perform conversion between a radio frequency signal and a baseband signal. The BBU 1220 is mainly configured to perform baseband processing, control a base station, and the like. The RRU 1210 and the BBU 1220 may be physically disposed together; or may be physically disposed separately, that is, in a distributed base station.

The BBU 1220 is a control center of the base station, and may also be referred to as a processing module. The BBU 1220 is mainly configured to implement baseband processing functions, such as channel coding, multiplexing, modulation, and spread spectrum. In addition, the processing module may control an action performed by the processing module 9002 in FIG. 9. For example, the BBU (the processing module) may be configured to control the base station to perform an operation procedure related to the network device in the foregoing method embodiments.

In an example, the BBU 1220 may include one or more boards. A plurality of boards can jointly support a radio access network (for example, an LTE network) of a single access standard, or each can support a radio access network (for example, an LTE network, a 5G network, or another network) of a different access standard. The BBU 1220 further includes a memory 1221 and a processor 1222. The memory 1221 is configured to store necessary instructions and data. The processor 1222 is configured to control the base station to perform necessary actions, for example, configured to control the base station to perform an operation procedure related to the network device in the foregoing method embodiments. The memory 1221 and the processor 1222 may serve one or more boards. In other words, a memory and a processor may be disposed on each board. Alternatively, a same memory and processor may be shared by a plurality of boards. In addition, a necessary circuit may be further disposed on each board.

An embodiment of this application further provides a computer-readable medium. The computer-readable medium stores a computer program. When the computer program is executed by a computer, functions in any one of the foregoing method embodiments are implemented.

An embodiment of this application further provides a computer program product. When the computer program product is executed by a computer, functions in any one of the foregoing method embodiments are implemented.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It can be understood that the systems, apparatuses, and methods described in this application may be alternatively implemented in other manners. For example, the described apparatus embodiments are merely examples. For example, division into the units is merely logical function division and may be other division in actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Various numerals in embodiments of this application are merely used for differentiation for ease of description, but are not intended to limit the scope of embodiments of this application. Sequence numbers of the foregoing processes do not mean execution sequences. The execution sequences of the processes should be determined based on functions and internal logic of the processes.

## Claims

1. A transmission method, comprising:
receiving, by a terminal device, first indication information, wherein the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam;
determining, by the terminal device, a first beam based on the first indication information; and
measuring or transmitting, by the terminal device, a reference signal based on the first beam, or transmitting a channel based on the first beam.

2. The method according to claim 1, wherein the reference signal comprises a channel state information-reference signal CSI-RS, the plurality of beams are respectively associated with a plurality of CSI-RS sets, each CSI-RS set comprises a plurality of CSI-RSs, and the measuring, by the terminal device, the reference signal based on the first beam comprises:
determining, by the terminal device from the plurality of CSI-RS sets, a first CSI-RS set associated with the first beam; and
measuring, by the terminal device, only the first CSI-RS set to obtain a first measurement result.

3. The method according to claim 2, wherein before the receiving, by the terminal device, the first indication information, the method further comprises:
receiving, by the terminal device, first configuration information, wherein the first configuration information indicates the terminal device to report a second measurement result of K groups of CSI-RSs, K is greater than or equal to 0, a second measurement result of each group of CSI-RSs comprises at least two CSI-RSs, and the at least two CSI-RSs are from different CSI-RS sets; and
after the terminal device switches from the first communication mode to the second communication mode, reporting, by the terminal device, only the first measurement result, wherein the first measurement result comprises a second measurement result of M CSI-RSs, the M CSI-RSs for the second measurement result are all from the first CSI-RS set, and M is greater than or equal to 0.

4. The method according to claim 1, wherein the reference signal comprises a channel state information-reference signal CSI-RS, a CSI-RS set comprises a plurality of CSI-RS groups and one or more CSI-RS resource pairs, each CSI-RS group comprises a plurality of CSI-RSs, CSI-RSs in the plurality of CSI-RS groups are associated with the plurality of beams, the CSI-RS resource pair comprises one CSI-RS from each CSI-RS group, and the measuring, by the terminal device, the reference signal based on the first beam comprises:
determining, by the terminal device from the CSI-RS set, a CSI-RS associated with the first beam; and
measuring, by the terminal device, only the CSI-RS associated with the first beam, to obtain a third measurement result.

5. The method according to claim 4, wherein before the receiving, by the terminal device, the first indication information, the method further comprises:
receiving, by the terminal device, second configuration information, wherein the second configuration information indicates the terminal device to report a fourth measurement result of X CSI-RSs, X is greater than or equal to 0, and/or the second configuration information indicates the terminal device to report a fifth measurement result of one CSI-RS resource pair; and
after the terminal device switches from the first communication mode to the second communication mode, reporting, by the terminal device, only the third measurement result.

6. The method according to any one of claims 1 to 5, wherein the reference signal comprises a sounding reference signal SRS, the plurality of beams are respectively associated with a plurality of SRS sets, and the transmitting, by the terminal device, the reference signal based on the first beam comprises:
determining, by the terminal device from the plurality of SRS sets, an SRS set associated with the first beam; and
sending, by the terminal device, only the SRS set associated with the first beam.

7. The method according to any one of claims 1 to 6, wherein the channel comprises a physical downlink shared channel PDSCH scheduled by a format of first downlink control information DCI, and the transmitting, by the terminal device, the channel based on the first beam comprises:
receiving, by the terminal device, the first DCI, wherein the first DCI is used for scheduling the PDSCH; and
receiving, by the terminal device by using the first beam, the PDSCH scheduled by the format of the first DCI.

8. The method according to claim 7, further comprising:
the first DCI comprises a first field, and the first field indicates that the terminal device is in the second communication mode, or the first field indicates that the terminal device receives the PDSCH by using the first beam; and
receiving, by the terminal device by using the first beam, the PDSCH scheduled by the format of the first DCI.

9. The method according to any one of claims 1 to 8, wherein the channel comprises a physical uplink shared channel PUSCH scheduled by a format of second downlink control information DCI, and the transmitting, by the terminal device, the channel based on the first beam comprises:
receiving, by the terminal device, the second DCI, wherein the second DCI is used for scheduling the PUSCH; and
sending, by the terminal device by using the first beam, the PUSCH scheduled by the format of the second DCI.

10. The method according to claim 9, further comprising:
the second DCI comprises a second field, and the second field indicates that the terminal device is in the second communication mode, or the second field indicates that the terminal device sends the PUSCH by using the first beam; and
sending, by the terminal device by using the first beam, the PUSCH scheduled by the format of the second DCI.

11. The method according to any one of claims 1 to 10, wherein the first indication information comprises a medium access control control element MAC CE.

12. The method according to claim 11, wherein the first indication information further comprises third downlink control information DCI, the third DCI indicates the terminal device to communicate with the single transmission node by using the first beam, and the determining, by the terminal device, the first beam based on the first indication information comprises:
switching, by the terminal device, from the first communication mode to the second communication mode based on the MAC CE; and
determining, by the terminal device, the first beam based on the third DCI.

13. The method according to any one of claims 1 to 12, wherein the plurality of transmission nodes comprise a first transmission node and a second transmission node, the transmission node is associated with a first timing advance TA, the first indication information is used to activate one or more beams associated with the transmission node, and the one or more beams associated with the transmission node are all associated with the first TA.

14. The method according to claim 13, wherein the second transmission node is associated with a second TA, and the method further comprises:
stopping, by the terminal device, a timer corresponding to the second TA;
stopping, by the terminal device, a random access channel RACH procedure corresponding to the second TA;
clearing, by the terminal device, sending of an uplink physical channel or an uplink reference signal corresponding to the second TA; and
clearing, by the terminal device, a hybrid automatic repeat request HARQ buffer corresponding to the second TA.

15. The method according to any one of claims 1 to 14, wherein an effective condition for the terminal device to switch from the first communication mode to the second communication mode is:
after a first time period in which the terminal device receives the first indication information and feeds back acknowledgment information to the network device.

16. The method according to any one of claims 1 to 15, wherein the first communication mode is a multiple transmission and reception point mTRP mode, and the second communication mode is a single transmission and reception point sTRP mode.

17. A transmission method, comprising:
sending first indication information to a terminal device, wherein the first indication information indicates the terminal device to switch from a first communication mode to a second communication mode, the first communication mode indicates that the terminal device communicates with a plurality of transmission nodes separately by using a plurality of beams, and the second communication mode indicates that the terminal device communicates with a single transmission node by using a single beam; and
receiving a measurement result of a reference signal from the terminal device, or transmitting a reference signal or a channel.

18. The method according to claim 17, wherein the reference signal comprises a channel state information-reference signal CSI-RS, the plurality of beams are respectively associated with a plurality of CSI-RS sets, each CSI-RS set comprises a plurality of CSI-RSs, and before the sending the first indication information to the terminal device, the method further comprises:
sending first configuration information to the terminal device, wherein the first configuration information indicates the terminal device to report a second measurement result of K groups of CSI-RSs, K is greater than or equal to 0, a second measurement result of each group of CSI-RSs comprises at least two CSI-RSs, and the at least two CSI-RSs are from different CSI-RS sets; and
after the sending the first indication information to the terminal device, the receiving the measurement result of the reference signal from the terminal device comprises:
receiving a first measurement result from the terminal device, wherein the first measurement result comprises a second measurement result of M CSI-RSs, the M CSI-RSs for the second measurement result are all from the first CSI-RS set, and M is greater than or equal to 0.

19. The method according to claim 17, wherein the reference signal comprises a channel state information-reference signal CSI-RS, a CSI-RS set comprises a plurality of CSI-RS groups and one or more CSI-RS resource pairs, each CSI-RS group comprises a plurality of CSI-RSs, CSI-RSs in the plurality of CSI-RS groups are associated with the plurality of beams, the CSI-RS resource pair comprises one CSI-RS from each CSI-RS group, and before the sending the first indication information to the terminal device, the method further comprises:
sending second configuration information to the terminal device, wherein the second configuration information indicates the terminal device to report a fourth measurement result of X CSI-RSs, X is greater than or equal to 0, and/or the second configuration information indicates the terminal device to report a fifth measurement result of one CSI-RS resource pair; and
after the sending the first indication information to the terminal device, the receiving the measurement result of the reference signal from the terminal device comprises:
receiving a third measurement result from the terminal device, wherein the third measurement result is a result of measuring, by the terminal device, only a CSI-RS associated with the first beam.

20. The method according to any one of claims 17 to 19, wherein the reference signal comprises a sounding reference signal SRS, the plurality of beams are respectively associated with a plurality of SRS sets, and the transmitting the reference signal comprises:
receiving an SRS set associated with the first beam.

21. The method according to any one of claims 17 to 20, wherein the channel comprises a physical downlink shared channel PDSCH scheduled by a format of first downlink control information DCI, and the transmitting the channel comprises:
sending the first DCI to the terminal device, wherein the first DCI is used for scheduling the PDSCH; and
sending the PDSCH scheduled by the format of the first DCI to the terminal device.

22. The method according to claim 21, further comprising:
the first DCI comprises a first field, and the first field indicates that the terminal device is in the second communication mode, or the first field indicates that the terminal device receives the PDSCH by using the first beam; and
sending the PDSCH scheduled by the format of the first DCI to the terminal device.

23. The method according to any one of claims 17 to 22, wherein the channel comprises a physical uplink shared channel PUSCH scheduled by a format of second downlink control information DCI, and the transmitting the channel comprises:
sending the second DCI to the terminal device, wherein the second DCI is used for scheduling the PUSCH; and
receiving the PUSCH scheduled by the format of the second DCI.

24. The method according to claim 23, further comprising:
the second DCI comprises a second field, and the second field indicates that the terminal device is in the second communication mode, or the second field indicates that the terminal device sends the PUSCH by using the first beam; and
receiving the PUSCH scheduled by the format of the second DCI.

25. The method according to any one of claims 17 to 24, wherein the first indication information comprises a medium access control control element MAC CE.
